# EUROPEAN PATENT APPLICATION

(11) **EP 3 324 636 A1**
(43) Date of publication of application: **23.05.2018**
(21) Application number: 17180523.7
(22) Date of filing: 10.07.2017
(51) Int. Cl.: H04N 21/2187, H04N 21/41, H04N 21/4223, H04N 21/431, H04N 21/4545, H04N 21/4788

(54) **ENHANCING A LIVE VIDEO**

(30) Priority: 22.11.2016 US 201615359092; 30.11.2016 WO PCT/US2016/064273
(71) Applicant: Facebook, Inc., Menlo Park, CA 94025 (US)
(72) Inventor: KEDENBURG III, George Lewis, Menlo Park, CA 94025 (US)
(74) Representative: Schröer, Gernot H.

(57) **Abstract**

The present disclosure is directed toward systems and methods for enhancing a live video stream. For example, systems and methods described herein enable a broadcaster to select various settings associated with a live video stream enhancement. Systems and methods described herein apply one or more live video stream enhancements to a live video stream in accordance with the broadcaster's settings. Furthermore, systems and methods described herein also automatically delete one or more live video stream enhancements in accordance with one or more of the broadcaster's deletion settings.

## Description

### BACKGROUND

Video communications are an increasingly popular method of connecting using mobile computing devices. For example, where users were once limited to only written electronic communications, they can now communicate electronically with a video taken from a mobile computing device, such as a smart phone. Recent advancements now enable users to provide live video streams as a means of communicating with other users. To illustrate, a communications system user can broadcast a live video stream, captured by a smartphone camera, to one or more co-users. The live video stream depicts the broadcaster in a non-time-shifted display (e.g., a live display).

Despite the ease of use associated with live video communications, broadcasting live video is problematic in that the video communication is generally limited to simple video. For example, live video is often broadcast from a client device such as a smart phone. Thus, the broadcaster generally does not have the opportunity to add any special graphical effects (e.g., computer generated images) or other enhancements to the live video stream. These video additions typical require that the broadcaster have access to bulky and resource draining software. The requirements of this type of software are often difficult, if not impossible, for a personal computing device to support.

Additionally, current methods of adding enhancements to video are performed in combination with pre-recorded video. For example, common video editing software can only add enhancements and other special effects to a video that has already been recorded and saved as a digital file. As such, the broadcaster who wants to broadcast a live video stream (e.g., not pre-recorded) is limited to merely broadcasting the plain un-edited video.

Plain video, however, does little to engage viewers. For example, when viewers are accustomed to special effects in movies and TV, a plain video often comes across as boring and unoriginal. Accordingly, a need exists for a way for broadcasters to add enhancements to a live video stream that will not overburden the resources of a personal computing device, such as a smartphone or tablet.

### SUMMARY

One or more embodiments described herein provide benefits and/or solve one or more of the foregoing or other problems in the art with systems and methods for enhancing a live video stream. For example, in one or more embodiments, the systems and methods described herein enable a broadcaster to add one or more enhancements (e.g., special graphical effects) to a live video stream in real-time. In particular, one or more embodiments enable the broadcaster to add enhancements to the live video stream from a personal computing device, such as a smartphone, during the broadcast of the live video stream.

Additionally, one or more embodiments described herein automatically delete the enhancements from the live video stream. For example, in response to the broadcaster defining one or more triggers (e.g., a time trigger, a motion trigger, a tracking trigger, etc.), systems and methods described herein automatically delete, in response to detecting one or more triggers, the enhancements added by the broadcaster. Thus, the broadcaster can continuously add new enhancements without the live video stream become cluttered and hard to view.

Additional features and advantages of the present application will be set forth in the description which follows, and in part will be obvious from the description, or may be learned by the practice of such exemplary embodiments. The features and advantages of such embodiments may be realized and obtained by means of the instruments and combinations particularly pointed out in the appended claims. These and other features will become more fully apparent from the following description and appended claims, or may be learned by the practice of such exemplary embodiments as set forth hereinafter.

Embodiments according to the invention are in particular disclosed in the attached claims directed to a method, a system, a storage medium and a computer program product, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof is disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

In an embodiment according to the invention, a method comprises: detecting a live video stream; identifying one or more video enhancement settings; embedding, in response to a detected user interaction in accordance with at least one of the one or more video enhancement settings, a video enhancement display element into the live video stream; detecting one or more deletion triggers associated with the video enhancement display element; and deleting, based on the detected deletion trigger, the video enhancement display element from the live video stream.

In an embodiment according to the invention, a computer-implemented method comprises: detecting, in particular by a video enhancement system of a communication system, a live video stream, in particular rom a broadcasting client device; identifying one or more video enhancement settings, in particular from the broadcasting client device; embedding, in particular on a server of the video enhancement system, in response to a detected user interaction, in particular on the broadcasting client device, in accordance with at least one of the one or more video enhancement settings, a video enhancement display element into the live video stream;
detecting one or more deletion triggers associated with the video enhancement display element; and deleting, based on the detected deletion trigger, the video enhancement display element from the live video stream.

Identifying one or more video enhancement settings may comprise one or more of identifying enhancement appearance settings and identifying enhancement deletion trigger settings.

Identifying enhancement appearance settings may comprise one or more of identifying color settings, identifying shape settings, identifying opacity settings, and identifying user interaction settings.

Identifying enhancement deletion trigger settings may comprise one or more of identifying time expiration deletion trigger settings, identifying motion deletion trigger settings, and identifying tracking deletion trigger settings.

The method further may comprise, in response to identifying tracking deletion trigger settings: analyzing the live video stream to identify an object displayed in the live video stream that has a spatial association with the video enhancement display element; detecting movement associated with the identified object; and repositioning the video enhancement display element such that the spatial association between the video enhancement display element and the identified object is retained.

Detecting one or more deletion triggers associated with the video enhancement display element may comprise one or more of: detecting the expiration of a threshold amount of time from when the video enhancement display element was embedded into the live video stream; detecting more than a threshold amount of motion within the live video stream; or detecting the exit of a tracked object from the live video stream.

The method further may comprise, in response to detecting a re-appearance of a tracked object into the live video stream, re-embedding the video enhancement display element into the live video stream.

Deleting the video enhancement display element may comprise progressively deleting line segments associated with the video enhancement display element.

In an embodiment according to the invention, a system comprises: at least one processor; and at least one non-transitory computer-readable storage medium storing instructions thereon that, when executed by the at least one processor, cause the system to: detect a live video stream;
identify one or more video enhancement settings; embed, in response to a detected user interaction in accordance with at least one of the one or more video enhancement settings, a video enhancement display element into the live video stream; detect one or more deletion triggers associated with the video enhancement display element; and delete, based on the detected deletion trigger, the video enhancement display element from the live video stream.

Identifying one or more video enhancement settings may comprise one or more of identifying enhancement appearance settings and identifying enhancement deletion trigger settings.

Identifying enhancement appearance settings may comprise one or more of identifying color settings, identifying shape settings, identifying opacity settings, or identifying user interaction settings.

Identifying enhancement deletion trigger settings may comprise one or more of identifying time expiration deletion trigger settings, identifying motion deletion trigger settings, or identifying tracking deletion trigger settings.

The system further may comprise instructions thereon that, when executed by the at least one processor, cause the system to, in response to identifying tracking deletion trigger settings: analyze the live video stream to identify an object displayed in the live video stream that is has a spatially association with the video enhancement display element; detect movement associated with the identified object; reposition the video enhancement display element such that the spatially association between the video enhancement display element and the identified object is retained.

Detecting one or more deletion triggers associated with the video enhancement display element may comprise one or more of: detecting the expiration of a threshold amount of time from when the video enhancement display element was embedded into the live video stream; detecting more than a threshold amount of motion within the live video stream; or detecting the exit of a tracked object from the live video stream.

The system further may comprise instructions thereon that, when executed by the at least one processor, cause the system to, in response to detecting a re-appearance of a tracked object into the live video stream, re-embed the video enhancement display element into the live video stream.

Deleting the video enhancement display element may comprise progressively deleting line segments associated with the video enhancement display element.

In an embodiment according to the invention, a non-transitory computer-readable medium may store instructions thereon that, when executed by at least one processor, may cause a computer system to: detect a live video stream; identify one or more video enhancement settings; embed, in response to a detected user interaction in accordance with at least one of the one or more video enhancement settings, a video enhancement display element into the live video stream; detect one or more deletion triggers associated with the video enhancement display element; and delete, based on the detected deletion trigger, the video enhancement display element from the live video stream.

Identifying one or more video enhancement settings may comprise one or more of identifying enhancement appearance settings or identifying enhancement deletion trigger settings.

Identifying enhancement appearance settings may comprise one or more of identifying color settings, identifying shape settings, identifying opacity settings, or identifying user interaction settings.

Identifying enhancement deletion trigger settings may comprise one or more of identifying time expiration deletion trigger settings, identifying motion deletion trigger settings, or identifying tracking deletion trigger settings.

In a further embodiment according to the invention, one or more computer-readable non-transitory storage media embody software that is operable when executed to perform a method according to the invention or any of the above mentioned embodiments.

In a further embodiment according to the invention, a system comprises: one or more processors; and at least one memory coupled to the processors and comprising instructions executable by the processors, the processors operable when executing the instructions to perform a method according to the invention or any of the above mentioned embodiments.

In a further embodiment according to the invention, a computer program product, preferably comprising a computer-readable non-transitory storage media, is operable when executed on a data processing system to perform a method according to the invention or any of the above mentioned embodiments.

### BRIEF DESCRIPTION OF THE DRAWINGS

In order to describe the manner in which the above recited and other advantages and features can be obtained, a more particular description of the aspects of one or more embodiments briefly described above will be rendered by reference to specific embodiments thereof that are illustrated in the appended drawings. It should be noted that the figures are not drawn to scale, and that elements of similar structure or function are generally represented by like reference numerals for illustrative purposes throughout the figures. Understanding that these drawings depict only typical embodiments and are not therefore to be considered to be limiting of scope, one or more embodiments will be described and explained with additional specificity and detail through the use of the accompanying drawings in which:
- FIG. 1: illustrates a schematic diagram of a video enhancement system in accordance with one or more embodiments;
- FIGS. 2A-2M: illustrate a series of graphical user interfaces of the video enhancement system in accordance with one or more embodiments illustrating various features of the video enhancement system;
- FIG. 3: illustrates a detailed schematic diagram of the video enhancement system in accordance with one or more embodiments;
- FIG. 4: illustrates a flowchart of a series of acts in a method of enhancing a live video stream in accordance with one or more embodiments;
- FIG. 5: illustrates a block diagram of an exemplary computing device in accordance with one or more embodiments;
- FIG. 6: is an example network environment of a social networking system in accordance with one or more embodiments; and
- FIG. 7: illustrates a social graph in accordance with one or more embodiments.

### DETAILED DESCRIPTION

One or more embodiments described herein provide benefits and/or solve one or more of the foregoing or other limitations and disadvantages in the art with systems and methods for enhancing live video streams. For example, in one or more embodiments, a video enhancement system enables a broadcaster (e.g., a user initiating a live video stream and from whose computing device the live video stream is provided) to configure one or more enhancements in connection with a live video stream. In some embodiments, the video enhancement system enables the broadcaster to configure one or more live video stream enhancements prior to the broadcast of the live video stream. In additional embodiments, the video enhancement system enables the broadcaster to configure live video stream enhancements during the broadcast of the live video stream.

In one or more embodiments, the video enhancement system enables the broadcaster to enhance the live video stream by utilizing various user interactions in connection with the live video stream. For example, the broadcaster can utilize a touch gesture to draw a word or symbol over a portion of the live video stream. The video enhancement system causes the word or symbol to be displayed in accordance with the broadcaster's enhancement configurations as an overlay on the corresponding portion of the live video stream. As such, one or more viewers of the live video stream see the broadcaster's live video enhancements in real-time.

Furthermore, the video enhancement system also automatically deletes the broadcaster's enhancements from the live video stream in accordance with the broadcaster's enhancement configurations. For example, the broadcaster can define one or more triggers that cause the video enhancement system to automatically delete a live video stream enhancement. In this way, the broadcaster can quickly update or add new live video stream enhancements without having to remove old enhancements.

As used herein, an "enhancement" refers to a graphical display element that the video enhancement system overlays on or embeds within a live video stream. For example, an enhancement can be a doodle drawn by the broadcaster. In that case, the video enhancement system overlays and embeds the doodle on the live video stream until the doodle's deletion is triggered. At that point, the video enhancement system deletes the doodle from the live video stream.

To illustrate the various example features and functionalities of the video enhancement system, an example embodiment can include a communications system user (e.g., a broadcaster) interacting with the communications system to initiate a live video stream. In response to detecting the initiation of the live video stream, the video enhancement system can provide various options that enable the broadcaster to configure the appearance of the enhancement. For example, if the broadcaster is configuring a doodle tool enhancement, the video enhancement system enables the broadcaster to select the doodle color, doodle style, doodle line width, doodle line opacity, etc.

Additionally, the video enhancement system can provide various options that enable the broadcaster to select one or more deletion triggers for the enhancement. In one or more embodiments, the video enhancement system enables the broadcaster to select an expiration time deletion trigger, a tracking deletion trigger, a movement deletion trigger, and so forth associated with an enhancement. For example, if the broadcaster has defined a doodle enhancement to have an expiration time deletion trigger of 2 seconds, the video enhancement system will display the broadcaster's doodles embedded in the live video stream for 2 seconds before automatically removing the broadcaster's doodles. At that point, the broadcaster can add more doodles to the live video stream, or can configure a different enhancement.

It will be understood that the video enhancement system provides the functionality described herein in association with the live video features of a communications system. For example, in one or more embodiments, the video enhancement system operates as part of a communications system application installed on a client-computing device associated with a broadcaster. Thus, the broadcaster does not need to obtain or install bulky video editing software in order to enhance a live video stream. Instead, the video enhancement system provides a streamlined solution for enhancing live videos that does not require extensive computational resources as conventional solutions.

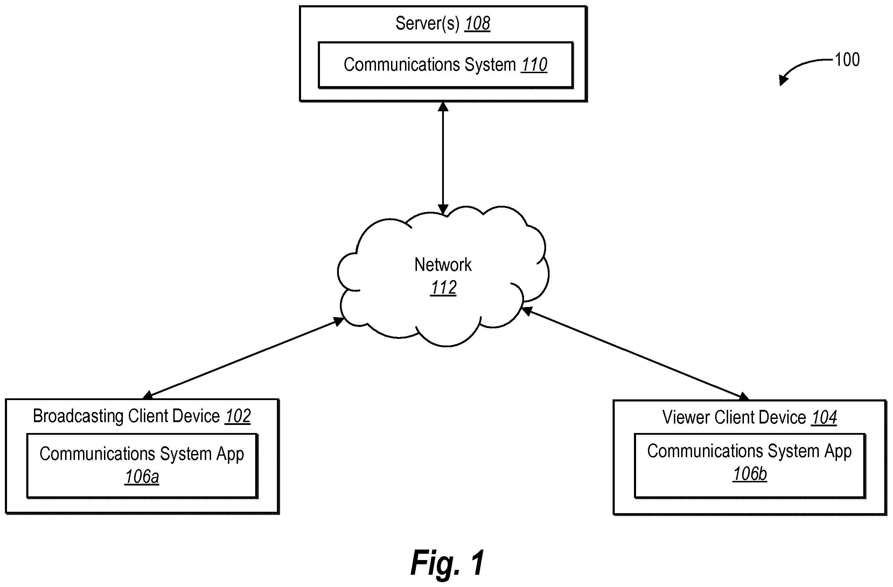

FIG. 1 illustrates an example block diagram of an environment for implementing the video enhancement system 100. As illustrated in FIG. 1, the video enhancement system 100 includes a broadcasting client device 102 including a communications system application 106a, and a viewer client device 104 including a communications system application 106b. Further shown in FIG. 1, the video enhancement system 100 also includes a server 108 hosting the communications system 110.

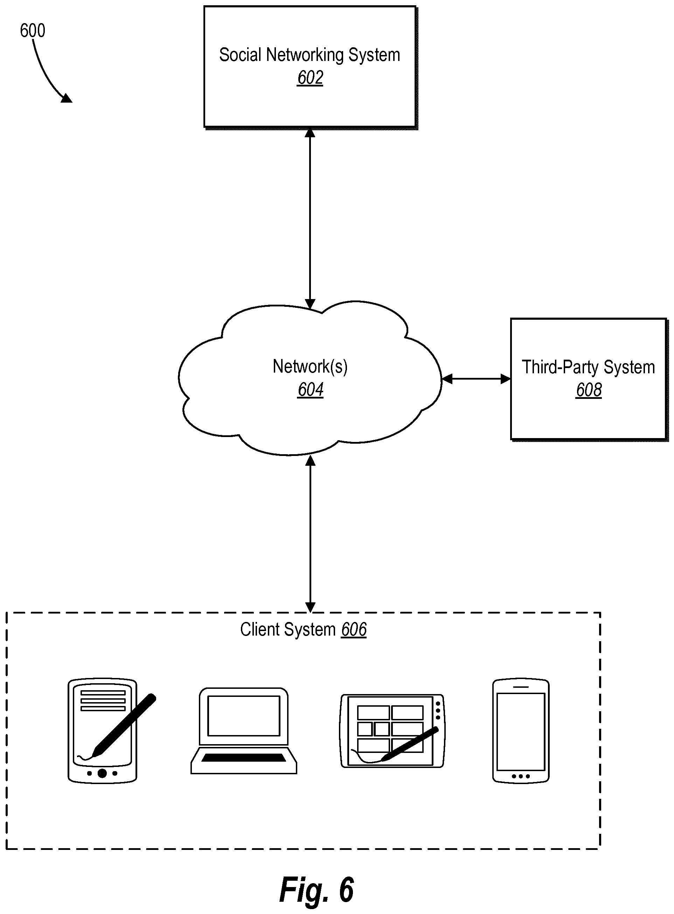

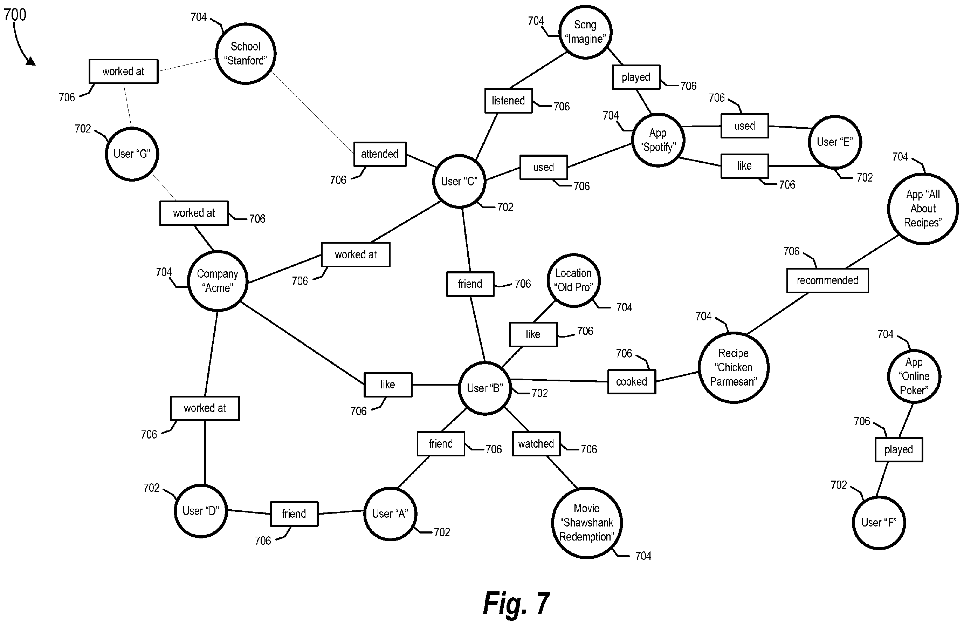

The communications system 110 comprises a system that facilitates messaging between users of the communications system 110. For example, the communications system 110 can allow users to direct message each other by sending texts, photographs, videos, or other digital media. In one or more embodiments, the communications system 110 comprises a social networking system such as that described in more detail below in relation to FIGS. 6 and 7.

The broadcasting client device 102, the viewer client device 104, and the server 108 communicate via a network 112, which may include one or more networks and may use one or more communication platforms or technologies suitable for transmitting data and/or communication signals. In one or more embodiments, the network 112 includes the Internet or World Wide Web. The network 112, however, can include various other types of networks that use various communication technologies and protocols, such as a corporate intranet, a virtual private network ("VPN"), a local area network ("LAN"), a wireless local network ("WLAN"), a cellular network, a wide area network ("WAN"), a metropolitan area network ("MAN"), or a combination of two or more such networks. Additional details relating to the network 112 are explained below with reference to FIG. 6.

Although FIG. 1 illustrates a particular number and arrangement of client devices, in additional embodiments the broadcasting client device 102 and the viewer client device 104 may directly communicate with the communications system 110, bypassing the network 112. Further, in other embodiments, the video enhancement system 100 may include any number of viewer client devices as well as additional client device authorized to interact with the broadcasting client device 102, the detail of which will be provided further below.

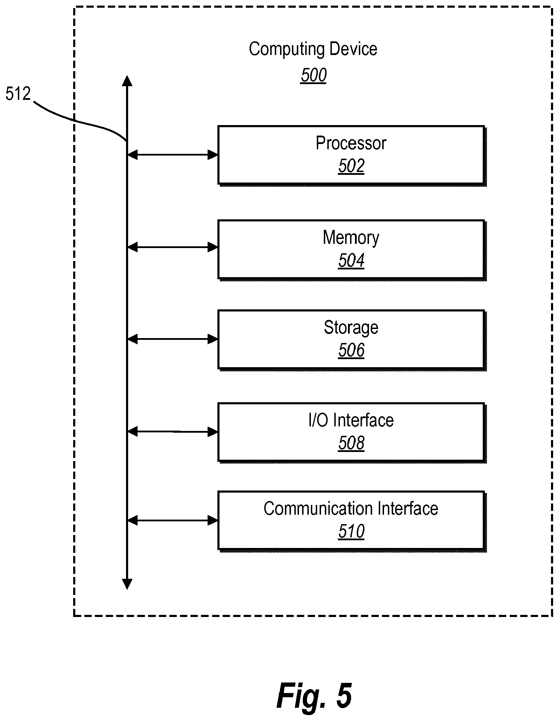

In one or more embodiments, the broadcasting client device 102 and the viewer client device 104 can be one of various types of computing devices. For example, each of the broadcasting client device 102 and the viewer client device 104 may include a mobile device such as a mobile telephone, a smartphone, a PDA, a tablet, or a laptop. Additionally, or alternatively, the broadcasting client device 102 and the viewer client device 104 may include a non-mobile device such as a desktop computer, a server, or another type of computing device. It will be understood that a broadcasting client device and a viewer client device can include the same type of computing functionality. In other words, in a preferred embodiment, both the broadcasting client device and the one or more viewer client devices are mobile computing devices such as smartphones. The broadcasting client device 102 is the client device from where the live video stream originates, while the viewer client device 104 is the client device where the live video stream is being viewed. In at least one embodiment, the user of the broadcasting client device 102 (e.g., the viewer) and the user of the viewer client device 104 (e.g., the viewer) are associated via the communications system 110. Additional details with respect to the broadcasting client device 102 and the viewer client device 104 are discussed below with respect to FIG. 5.

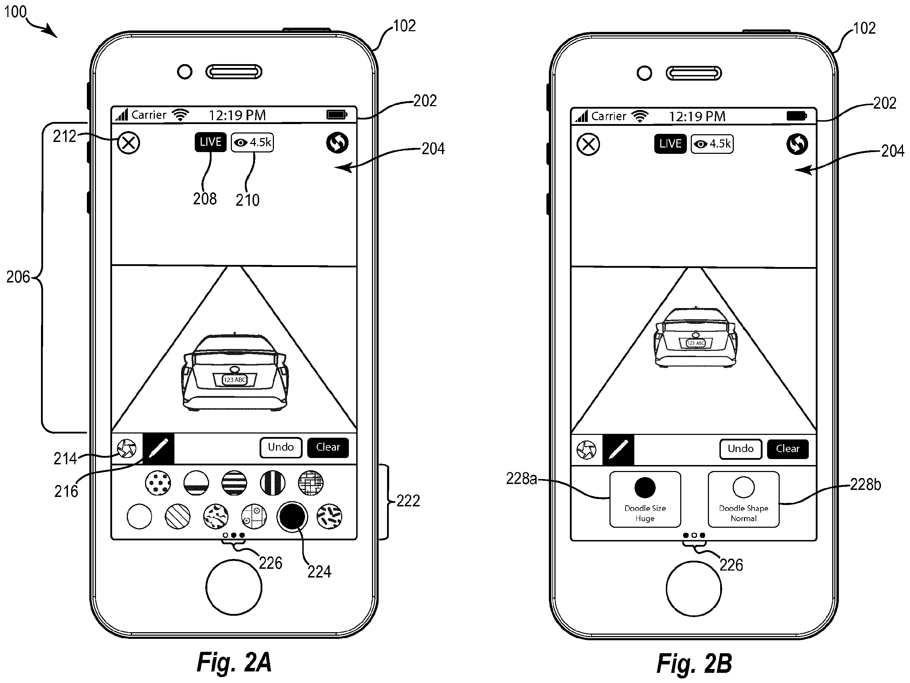

As will be described in more detail below, the components of the video enhancement system 100 can provide, along and/or in combination with the other components, one or more graphical user interfaces ("GUIs"). In particular, the communications system applications 106a, 106b can display one or more GUIs generated by the communications system applications 106a, 106b, and/or the communications system 110. The communications system applications 106a, 106b enable a user (e.g., a broadcaster or a viewer) to interact with a collection of display elements provided within one or more GUIs for a variety of purposes. FIGS. 2A-2M and the description that follows illustrate various example embodiments of the GUIs that are used to describe the various features of the video enhancement system 100.

As mentioned above, the communications system 110 enables a broadcaster to initiate a live video stream from the broadcasting client device 102. As used herein, the term "broadcaster" means a user of the communications system 110 who initiates or otherwise provides a live video presentation. The broadcaster can be a person, merchant, business, or other organization. Also as used herein, the term "viewer" means a user of the communications system 110 who views a live video stream via the communications system 110. In one or more embodiments, in response to the broadcaster initiating a live video stream, the video enhancement system 100 provides the enhancement GUI 204 on the touch screen display 202 of the broadcasting client device 102, as shown in FIG. 2A. In particular, the broadcaster can interact with the enhancement GUI 204 to define and create a live video stream enhancement.

For example, and as illustrated in FIG. 2A, the enhancement GUI 204 provides various controls, settings, and definitions that allow a broadcaster to define, select, and otherwise configure an enhancement, and also to apply the enhancement to the live video stream. Specifically, the enhancement GUI 204 can include a live video stream display 206. In one or more embodiments, the live video stream display 206 provides a display of the live video stream that the broadcasting client device 102 is sending to the communications system 110.

In one or more embodiments, as shown in FIG. 2A, the enhancement GUI 204 also includes various indicators. For example, the enhancement GUI 204 can include the live indicator 208. In at least one embodiment, the communications system application 106a includes the live indicator 208 on the enhancement GUI 204 to inform the broadcaster that the video in the live video stream display 206 is live (e.g., is being broadcast to the communications system 110 for subsequent display to one or more viewers). Additionally, the communications system application 106a can include the viewer indicator 210, which informs the broadcaster as to how many viewers are currently watching the live video stream.

The video enhancement system 100 provides various controls in the enhancement GUI 204 that enable the broadcaster to define or otherwise configure various enhancement settings. For example, as shown in FIG. 2A, the broadcaster can apply one or more filters to the live video stream by selecting the filter control 214. Furthermore, as shown in FIG. 2A, the broadcaster can define and apply an enhancement by selecting the enhancement control 216. For example, as shown in FIGS. 2A-2G, the broadcaster can define and apply a doodle enhancement. As mentioned above, a doodle enhancement enables the broadcaster to draw shapes and figures directly over the live video stream. The video enhancement system 100 then deletes the broadcaster's "doodles" according to the deletion trigger defined by the broadcaster.

In response to the broadcaster selecting the enhancement control 216, the video enhancement system 100 provides a sliding palette 222 that includes various setting controls that enable the broadcaster to define an enhancement. For example, as shown in FIG. 2A, the sliding palette 222 includes color and pattern controls, such as the color control 224. In response to the broadcaster selecting the color control 224, the video enhancement system 100 applies the represented color to the broadcaster's doodles. In additional embodiments, the sliding palette 222 can include additional appearance settings such as line opacity settings, animation settings, stamp settings, sticker settings, sound effect settings, and so forth.

The swipe indicator 226 indicates additional portions of the sliding palette 222. For example, in response to the broadcaster swiping right on the sliding palette 222, the video enhancement system 100 can provide the line controls 228a, 228b, as shown in FIG. 2B. In one or more embodiments, the line controls 228a, 228b enable the user to configure the size and shape of the line that the broadcaster doodles in the doodle enhancement. For example, by repeatedly selecting the line control 228a, the broadcaster can select one of a variety of line sizes (e.g., "huge," "medium," "small," "tiny," etc.). Similarly, by repeatedly selecting the line control 228b, the broadcaster can select one of a variety of line styles (e.g., normal, neon, marker, brush, etc.). In additional or alternative embodiments, the palette can include additional controls that enable the broadcaster to select stickers, stamps, sound effects, animations, and so forth that the broadcaster can utilize as part of an enhancement. Furthermore, in at least one alternative embodiment, by selecting either of the line controls 228a, 228b, the video enhancement system 100 can provide a popup window containing further options, demonstrations, and so forth. Additionally, in at least one embodiment, the sliding palette 222 includes controls that enable the broadcaster to select user interaction settings that dictate how an enhancement is applied to a live video feed (e.g., a tap gesture adds a stamp, a swipe gesture adds a doodle, etc.).

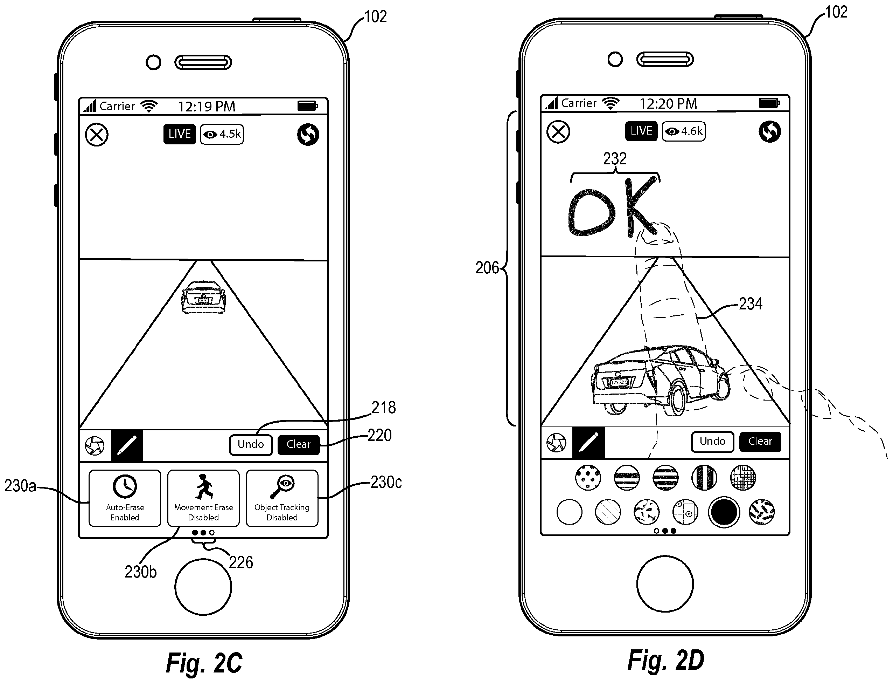

In response to the broadcaster swiping right again on the sliding palette 222, the video enhancement system 100 can provide various controls by which the broadcaster can select one or more deletion triggers. As mentioned above, the video enhancement system 100 will continue to display an enhancement overlaid on a live video stream until the video enhancement system 100 detects the occurrence of a deletion trigger. As shown in FIG. 2C, the broadcaster can specify one or more deletion triggers by selecting one or more of the deletion trigger controls 230a, 230b, and 230c. In at least one alternative embodiment, in response to the broadcaster selecting no deletion trigger control, the video enhancement system 100 will not delete any enhancement added to the live video stream until the live video stream ends or until a default trigger is detected.

In response to the broadcaster selecting the deletion trigger control 230a, the video enhancement system will apply a time expiration deletion trigger to any of the broadcaster's live video enhancements. To illustrate a doodle enhancement with a time expiration deletion trigger, the broadcaster can doodle an enhancement (e.g., "ok") using his finger 234, as shown in FIG. 2D. As illustrated in FIG. 2D, as the broadcaster doodles, the video enhancement system 100 adds a corresponding video enhancement display element 232 in real-time, embedded in the live video stream display 206. Thus, from both the broadcaster's perspective and the perspective of any viewer of the live video stream, the broadcaster appears to be drawing on the live video stream. In response to the broadcaster selecting a time expiration deletion trigger associated with the video enhancement display element 232, the video enhancement system 100 deletes the video enhancement display element 232 after a predetermined amount of time elapses from when the video enhancement system 100 first embeds the video enhancement display element 232 in the live video stream. In some embodiments, the video enhancement system 100 deletes the video enhancement display element 232 as a single unit. For example, in that case, the video enhancement system 100 deletes the entire video enhancement display element 232 after a predetermined amount of time elapses from when the broadcaster stops drawing.

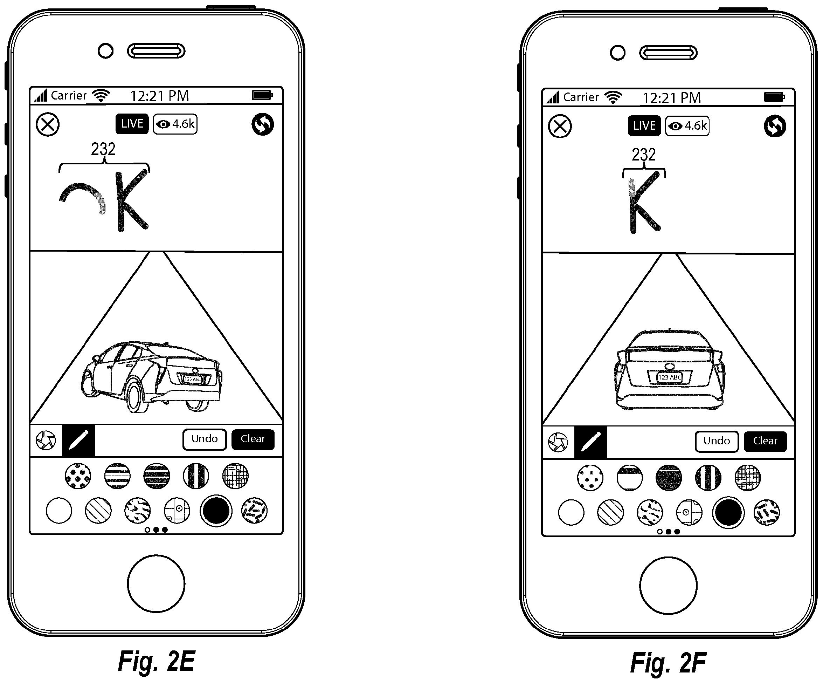

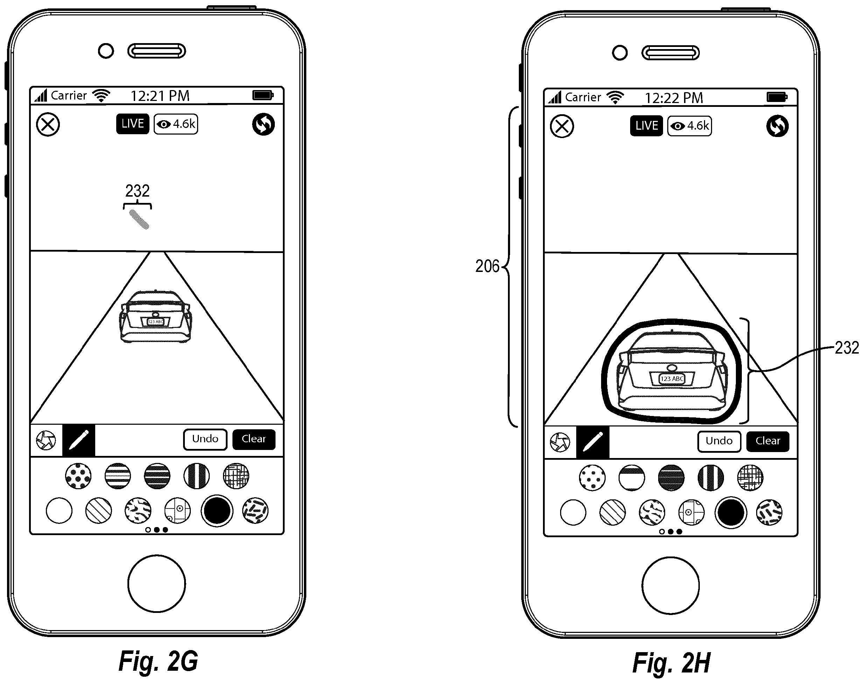

In other embodiments, the video enhancement system 100 treats the video enhancement display element 232 as a collection of connected line segments and progressively deletes each line segment as a predetermined amount of time elapses from when the broadcaster draws the line segment. For example, as shown in FIG. 2E, the video enhancement system 100 determines that the predetermined amount of time has elapsed from when the broadcaster drew the line segments making up the bottom half of the "o." Accordingly, the video enhancement system 100 has deleted those line segments. In at least one embodiment, the video enhancement system 100 deletes the line segments with a fading animation, making it appear to the broadcaster and viewers that the segments of the video enhancement display element 232 are fading away in the same order in which the broadcaster drew them. This "fading away" effect is further illustrated in connection with the video enhancement display element 232 as shown in FIGS. 2F and 2G.

More specifically regarding time expiration deletion trigger, the video enhancement system 100 associates a time (e.g., a time stamp) with each line segment or dot of the video enhancement display element 232. Each line segment can comprise a plurality of overlapping dots. Upon the passage of the predetermined amount of time from the time a particular line segment or dot was added, the video enhancement system 100 deletes the line segment or dot.

In still further embodiments, the video enhancement system 100 detects a multi-step trigger before deleting a video enhancement display element 232. For example, the video enhancement system 100 can detect that a video enhancement display element 232 is complete or finished prior to deleting any dots or line segments. This can ensure that words or other video enhancement display elements are shown in their entirety prior to portions being deleted. For example, the video enhancement system 100 can detect a first predetermined amount of time has passed since receiving user input creating a video enhancement display element prior to deleting any portions of a video enhancement display element. Once the first predetermined amount of time has passed from receiving any user input creating a video enhancement display element, the video enhancement system 100 can detect once a second predetermined time has passed since a particular dot or line was added and then delete the particular dot or line. Thus, the first predetermined amount of time can act as a delay to the process described above to ensure that a particular video enhancement display element (such as a word) is shown in its entirety prior deleting any portion thereof.

As mentioned above, and as illustrated in FIG. 2C, the video enhancement system 100 enables the broadcaster to apply other types of deletion triggers to an enhancement. For example, in response to the broadcaster selecting the deletion trigger control 230b, the video enhancement system 100 applies a motion deletion trigger to any enhancements the broadcaster adds to the live video stream. For example, FIGS. 2H-2J illustrate the functionality of the motion deletion trigger, as described herein.

For instance, as shown in FIG. 2H, the broadcaster has drawn the video enhancement display element 232 (e.g., a circle drawn around the back-end of the car featured in the live video stream display 206). If the live video stream illustrated in FIGS. 2H-2J depicts a sports car accelerating from zero to sixty miles per hour, the beginning of the live video stream will feature several seconds of the car standing still. Thus, the video enhancement system 100 detects no motion within the live video stream display 206 and continues to display the video enhancement display element 232.

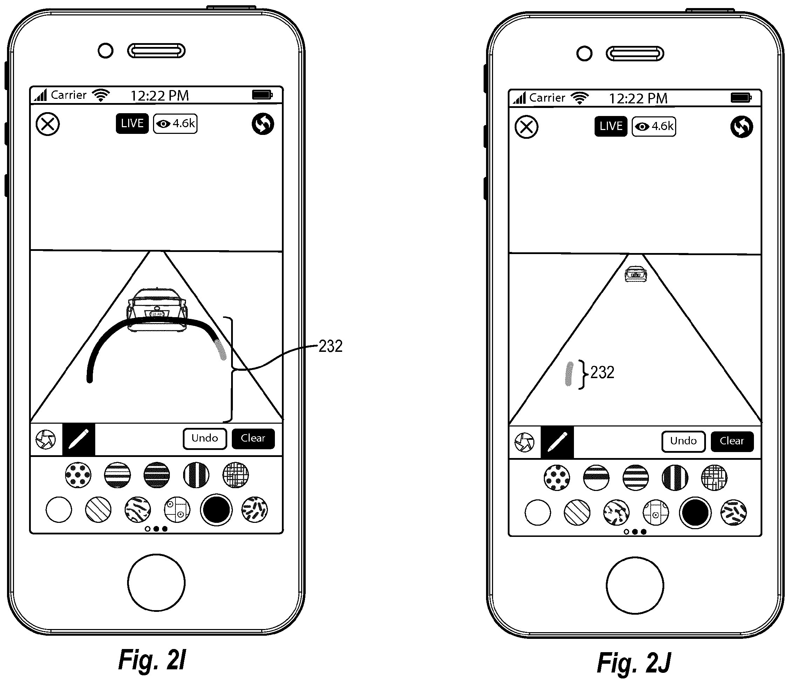

Next, as shown in FIG. 2I, the car begins to accelerate away from the broadcaster. Thus, in response to detecting a threshold amount of motion within the live video stream display 206 about the video enhancement display element 232, the video enhancement system 100 deletes the video enhancement display element 232. As described above, the video enhancement system 100 can delete the video enhancement display element 232 as a single unit, or may progressively delete line segments within the video enhancement display element 232 in the same order that the broadcaster drew the line segments. For example, as shown in FIGS. 2I and 2J, the video enhancement system 100 progressively deletes line segments of the video enhancement display element 232 until the video enhancement display element 232 is completely deleted from the live video stream display 206.

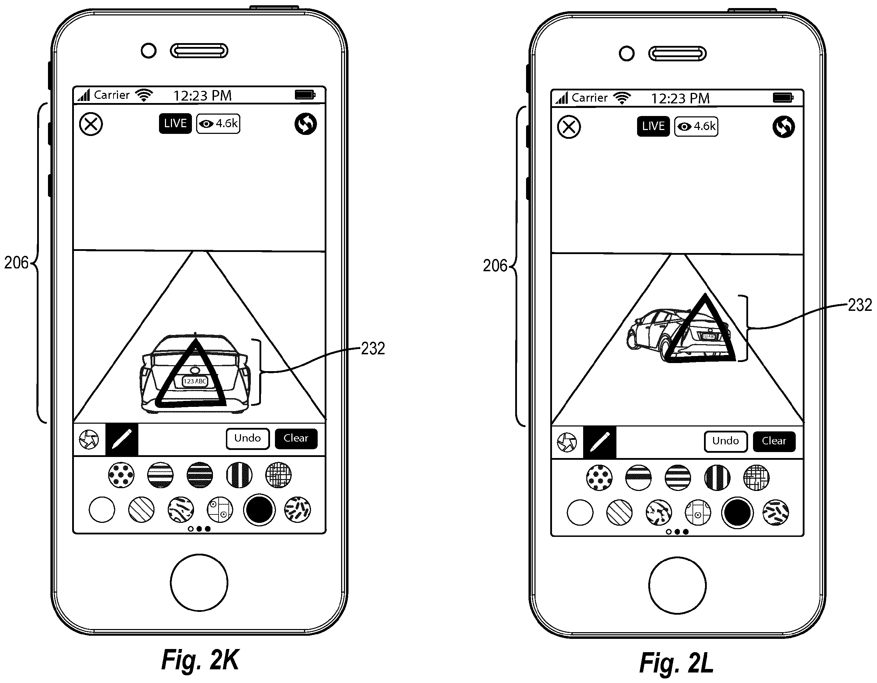

Finally, as illustrated in FIG. 2C, the video enhancement system 100 enables the broadcaster to apply a third type of deletion trigger to an enhancement. For example, in response to the broadcaster selecting the deletion trigger control 230c, the video enhancement system 100 applies a tracking deletion trigger to any enhancements the broadcaster adds to the live video stream. For example, FIGS. 2K-2M illustrate the functionality of the tracking deletion trigger, as described herein.

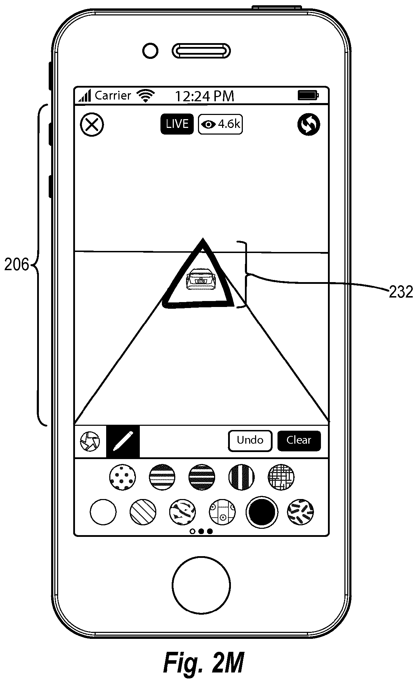

As shown in FIG. 2K, in response to the broadcaster adding the video enhancement display element 232 to the live video stream display 206, the video enhancement system 100 anchors the video enhancement display element 232 to the portion of the live video stream display 206 over which the video enhancement display element 232 is positioned. For example, as shown in FIG. 2K, the video enhancement display element 232 is a triangle that the broadcaster has drawn over the back-end of a car. Accordingly, the video enhancement system 100 anchors the video enhancement display element 232 to the portion of the car displayed within the triangle. Thus, as shown in FIGS. 2L and 2M, as that portion of the car moves around within the live video stream display 206, the video enhancement system 100 continues to display the video enhancement display element 232 anchored to the same portion of the car. As shown in FIG. 2M, when the object over which the video enhancement display element 232 is tracking changes in scale, the video enhancement system 100 centers the video enhancement display element 232 over the tracked object.

In at least one embodiment, the video enhancement system 100 can anchor the video enhancement display element 232 to an underlying object until the object moves out of the live video stream display 206. As soon as the underlying object is no longer visible, the video enhancement system 100 deletes the video enhancement display element 232 either as a whole or progressively, as described above. In at least one embodiment, the video enhancement system 100 re-displays the video enhancement display element 232 if the underlying object moves back into the live video stream display 206.

More particularly, in one or more embodiments the video enhancement system 100 detects a spatial relationship between a video enhancement display element 232 and an object in the video. For example, in relation to FIG. 2K, the video enhancement system 100 determines a spatial relationship between the video enhancement display element 232 and the license plate of the car. The video enhancement system 100 then tracks the license plate through the video as the car moves. The video enhancement system 100 maintains the spatial relationship between the video enhancement display element 232 and the license plate of the car. For example, FIG. 2K illustrates that the video enhancement display element 232 surrounds the license plate of the car. As shown in FIG. 2L, when the car moves, the video enhancement system 100 maintains the spatial relationship between the video enhancement display element 232 and the license plate of the car (e.g., keeps the video enhancement display element 232 surrounding and the license plate of the car).

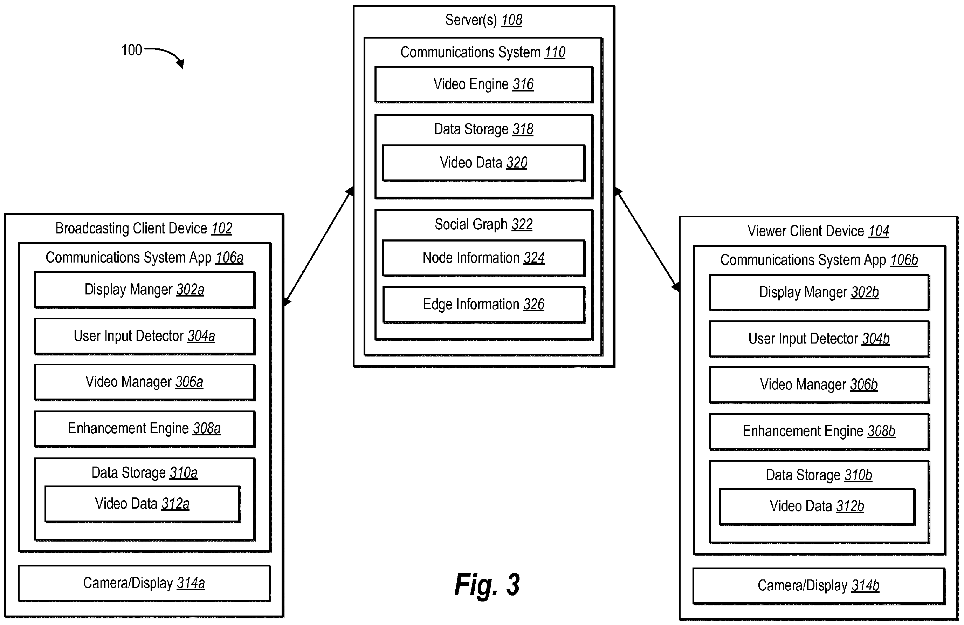

FIG. 3 illustrates a schematic diagram illustrating an example embodiment of the video enhancement system 100. As shown in FIG. 3, the video enhancement system 100 includes various components for performing the processes and features described herein. For example, as shown in FIG. 3, the video enhancement system 100 includes, but is not limited to, the broadcasting client device 102, the viewer client device 104, and the server 110. In one or more embodiments, the broadcasting client device 102 and the viewer client device 104 each include the communications system application 106a and 106b, respectively. The communications system applications 106a and 106b includes a display manager 302a, 302b, a user input detector 304a, 304b, a video manager 306a, 306b, an enhancement engine 308a, 308b, and a data storage 310a, 310b including video data 312a, 312b. Additionally, the broadcasting client device 102 and the viewer client device 104 include camera and display features 314a, 314b.

Also illustrated in FIG. 3, the server 108 hosts the communications system 110. In one or more embodiments, the communications system 110 includes a video engine 316, data storage 318 including video data 320, and a social graph 322 including node information 324 and edge information 326. Node information 324 of the social graph 322 stores information including, for example, nodes for users and nodes for repositories. Edge information 326 of the social graph 322 stores information including relationships between nodes and/or actions occurring within the communications system 110. Further details regarding the communications system 110, the social graph 322, edges, and nodes is presented below with respect to FIG. 7.

Each of the components of the communications system applications 106a, 106b, and the components of the communications system 110 can be implemented using a computing device including at least one processor executing instructions that cause the video enhancement system 100 to perform the processes described herein. In some embodiments, the communications system components described herein can be implemented by the server 108, or across multiple server devices. Additionally or alternatively, a combination of one or more server devices and one or more client devices can implement the components of the communications system applications 106a, 106b. Moreover, the components described herein can comprise a combination of computer-executable instructions and hardware.

In one or more embodiments, the communications system applications 106a, 106b are native applications installed on the broadcasting device 102 and the viewer client device 104, respectively. For example, either of the communications system applications 106a, 106b can be a mobile application that installs and runs on a mobile device, such as a smart phone or a tablet computer. Alternatively, either of the communications system applications 106a, 106b can be a desktop application, widget, or other form of a native computer program. Furthermore, either of the communications system applications 106a, 106b may be a remote application accessed by the broadcasting client device 102 or the viewer client device 104. For example, either of the communications system applications 106a, 106b may be a web application that is executed within a web browser of the broadcasting client device 102, or the viewer client device 104, respectively.

As mentioned above, and as shown in FIG. 3, the communications system applications 106a, 106b include a display manager 302a, 302b. The display manager 302a, 302b provides, manages, and/or controls a graphical user interface that allows a user to interact with features of the communications system 110 and the video enhancement system 100. For example, the display manager 302a, 302b provides a graphical user interface that facilitates the display of a social networking system newsfeed associated with the user of a client device (e.g., the broadcasting client device 102 or the viewer client device 104). A social networking system user's news-feed can include social networking posts composed by co-users (e.g., "friends") of the social networking system user, along with articles, advertisements and so forth. In at least one embodiment, the user's newsfeed can include a structured object that when selected causes the communications system 110 to open a graphical user interface where the user may initiate a live video stream or view a live video stream.

More specifically, the display manager 302a, 302b facilitates the display of a graphical user interface. For example, the display manager 302a, 302b may compose the graphical user interface of a plurality of graphical components, objects, and/or elements that allow a user to engage in social networking system activities. More particularly, the display manager 302a, 302b may direct the broadcasting client device 102 and the viewer client device 104, respectively, to display a group of graphical components, objects, and/or elements that enable a user to interact with various features of the communications system 110.

In addition, the display manager 302a, 302b directs the broadcasting client device 102 and the viewer client device 104, respectively, to display one or more graphical objects, controls, or elements that facilitate user input for interacting with various features of the communications system 110. To illustrate, the display manager 302a, 302b provides a graphical user interface that allows a user to input one or more types of content into a social networking system post or electronic message. As used herein, "content" refers to any data or information to be included as part of a communications system post or electronic message. For example, the term "content" will be used herein to generally describe text, images, digital media, files, location information, payment information, or any other data that can be included as part of a communications system post or electronic message.

The display manager 302a, 302b also facilitates the input of text or other data for the purpose of interacting with one or more features of the communications system 110. For example, the display manager 302a, 302b provides a user interface that includes a touch display keyboard. A user can interact with the touch display keyboard using one or more touch gestures to input text to be included in a social networking system post or electronic message. For example, a user can use the touch display keyboard to compose a message. In addition to text, the graphical user interface including the touch display keyboard can facilitate the input of various other characters, symbols, icons, or other information.

Furthermore, the display manager 302a, 302b is capable of transitioning between two or more graphical user interfaces. For example, in one embodiment, the display manager 302a, 302b provides a newsfeed to a social networking system user containing one or more social networking system posts from co-users. Later, in response to detected input from the social networking system user in connection with a structured object within the newsfeed, the display manager 302a, 302b transitions to a second graphical user interface that includes a display of a live video stream.

As further illustrated in FIG. 3, the communications system application 106a, 106b includes a user input detector 304a, 304b, respectively. In one or more embodiments, the user input detector 304a, 304b detects, receives, and/or facilitates user input in any suitable manner. In some examples, the user input detector 304a, 304b detects one or more user interactions with respect to the user interface. As referred to herein, a "user interaction" means a single interaction, or combination of interactions, received from a user by way of one or more input devices. For example, the user input detector 304a, 304b detects a user interaction from a keyboard, mouse, touch page, touch screen, and/or any other input device. In the event the broadcasting client device 102 and/or the viewer client device 104 includes a touch screen, the user input detector 304a, 304b, respectively, detects one or more touch gestures (e.g., swipe gestures, tap gestures, pinch gestures, reverse pinch gestures) from a user that forms a user interaction. In some examples, a user can provide the touch gestures in relation to and/or directed at one or more graphical objects or graphical elements of a user interface.

The user input detector 304a, 304b may additionally, or alternatively, receive data representative of a user interaction. For example, the user input detector 304a, 304b may receive one or more user configurable parameters from a user, one or more commands from the user, and/or any other suitable user input. The user input detector 304a, 304b may receive input data from one or more components of the communications system 110, or from one or more remote locations.

The communications system application 106a, 106b performs one or more functions in response to the user input detector 304a, 304b detecting user input and/or receiving other data. Generally, a user can control, navigate within, and otherwise use the communications system application 106a, 106b by providing one or more user inputs that the user input detector 304a, 304b can detect. For example, in response to the user input detector 304a, 304b detecting user input, one or more components of the communications system application 106a, 106b allow a social networking system user to scroll through a newsfeed. In another example, in response to the user input detector 304a, 304b detecting user input, one or more components of the communications system application 106a, 106b allow the user to interact with a live video stream display.

In at least one embodiment, the user input detector 304a, 304b determines whether a detected user interaction is in connection with a live video stream display. For example, as described above, one or more features of the video enhancement system provide a live video stream display, in connection with which a viewer can interact using various touch gestures (e.g., tap the element, swipe the element, etc.). Accordingly, the user input detector 304a, 304b can determine when, for example, a viewer's tap touch gesture is over a portion of a live video stream display. In response to determining that the touch gesture is over a portion of the live video stream display, the user input detector 304a, 304b can report the touch gesture to the video enhancement system 100.

As further illustrated in FIG. 3, the communications system application 106a, 106b includes a video manager 306a, 306b. In one or more embodiments, the video manager 306a, 306b handles all activities necessary for broadcasting and viewing a live video stream. For example, on the broadcasting client device 102, the video manager 306a interfaces with the camera features 314a associated with the broadcasting client device 102. For instance, the broadcasting client device 102 directs the capture of the live video stream from one or more cameras associated with the broadcasting client device 102. Similarly, on the viewer client device 104, the video manager 306b interfaces with the display features 314b associated with the viewer client device 104. For example, the video manager 306b interfaces with one or more displays associated with the viewer client device 104 in order to display a live video stream received from the communications system 110.

Additionally, the video manager 306a, 306b communicates with the communications system 110 in order to provide and/or receive a live video stream. For example, on the broadcasting client device 102, the video manager 306a initiates a live video link or connection with the communications system 110, which enables the communications system 110 to receive a live video stream captured at the broadcasting client device 102 in real-time. It follows that, at the viewer client device 104, the video manager 306b initiates the live video link or connection with the social networking system 100, which enables the communications system 110 to provide a live video stream to the viewer client device 104 in real-time.

Also as shown in FIG. 3, the communications system application 106a, 106b includes an enhancement engine 308a, 308b. In one or more embodiments, the enhancement engine 308a, 308b receives one or more video enhancement settings. For example, in at least one embodiment, the enhancement engine 308a provides various controls as a menu within a live video graphical user interface that enable the broadcaster to select enhancement appearance settings and deletion trigger settings. For instance, the enhancement engine 308a provides controls that enable the broadcaster to select enhancement appearance settings including, but not limited to, the enhancement type (e.g., doodle, stamp, mask, sound effect, etc.), the enhancement color, the enhancement line width, the enhancement line opacity, and so forth. Additionally, the enhancement engine 308a provides controls that enable the broadcaster to select deletion trigger settings including, but not limited to, a time expiration deletion trigger, a motion deletion trigger, and/or a tracking deletion trigger. In at least one embodiment, the enhancement engine 308b may provide these same controls on the viewer client device 104 for a viewer to select one or more video enhancement settings. Additionally, in at least one embodiment, the enhancement engine 308a, 308b enables the broadcaster or viewer to select video enhancement settings for a single enhancement or for multiple enhancements.

In one or more embodiments, the enhancement engine 308a, 308b also applies video enhancement settings to a live video stream. For example, as described above, a broadcaster or viewer may select various video enhancement settings that instruct the enhancement engine 308a, 308b regarding the type, appearance, and deletion trigger(s) associated with a particular enhancement. Accordingly, depending on the video enhancement settings, the enhancement engine 308a, 308b overlays or embeds an enhancement on a live video stream, detects an occurrence of a deletion trigger, and deletes the enhancement in response to the deletion trigger.

To illustrate, in one embodiment, the broadcaster may select video enhancement settings that instruct the enhancement engine 308a to embed a red doodle enhancement on a live video stream and to display the red doodle enhancement for five seconds before deleting the doodle enhancement (e.g., a time expiration deletion trigger). In one or more embodiments, a doodle-type enhancement enables the broadcaster to draw a doodle (e.g., a drawing) over the live video stream utilizing touch gestures in connection with a touch screen display. Accordingly, after receiving the broadcaster's video enhancement settings, the enhancement engine 308a causes a video enhancement display element representing a doodle corresponding to the broadcaster's touch gestures to be displayed over the broadcaster's live video stream. The enhancement engine 308a not only displays the video enhancement display element over the live video stream at the broadcasting client device 102 but also embeds the video enhancement display element into the live video stream such that one or more viewers also see the doodles when receiving the live video stream from the communications system 110. The enhancement engine 308a continues to display the doodles for five seconds and then deletes the doodles from the live video stream.

In another example, the broadcaster may select video enhancement settings that instruct the enhancement engine 308a to overlay a graphical mask enhancement in response to a tap touch gesture and to continue to display the mask until motion is detected in the live video stream (e.g., a motion deletion trigger). In one or more embodiments, the graphical mask enhancement enables the broadcaster to select a mask (e.g., an opaque graphic) and overlay the mask on a portion of the live video stream in response to specific touch gesture (e.g., a tap touch gesture). Accordingly, after receiving the broadcaster's video enhancement settings, the enhancement engine 308a causes a mask to be overlaid on a portion of the live video stream where the broadcaster taps (e.g., over the face of a person displayed in the live video stream). The enhancement engine 308a continues to display the mask until the enhancement engine 308a detects a threshold amount of motion within the live video stream (e.g., the person behind the mask moves), at which point the enhancement engine 308a deletes the mask from the live video stream.

In yet another example, the broadcaster may select video enhancement settings that instruct the enhancement engine 308a to overlay an animated graphic anchored to an object within the live video stream and to continue to display the animated graphic anchored to the object while the object is within the live video stream (e.g., a tracking deletion trigger). For example, the broadcaster may select an animated "halo" graphic and anchor the halo over the head of a person shown in the live video feed. In response to the broadcaster selecting the person as the object to be tracked by the enhancement engine 308a, the enhancement engine 308a can display the animated halo over the person's head, even when the person moves within the live video stream. The enhancement engine 308a can then delete the halo graphic from the live video stream as soon as the person is no longer displayed within the live video stream. In at least one embodiment, the enhancement engine 308a can display an enhancement each time the tracked object re-enters the live video stream (e.g., the halo graphic would reappear over the person's head when the person is again displayed in the live video stream).

Thus, in addition to applying the video enhancement settings selected by the broadcaster, the enhancement engine 308a, 308b also detects when an enhancement deletion is triggered. For example, the enhancement engine 308a, 308b detect the expiration of a time limit associated with an enhancement (e.g., an amount of time that has elapsed from when a video enhancement display element is added to the live video stream). Additionally, in one or more embodiments, the enhancement engine 308a, 308b detects a threshold amount of motion within a live video stream. The enhancement engine 308a, 308b can detect motion by analyzing pixels, object spacing, and so forth. Furthermore, in one or more embodiments, the enhancement engine 308a, 308b tracks one or more objects within a live video stream. The enhancement engine 308a, 308b tracks objects utilizing image analysis, computer vision, and so forth.

In response to detecting a deletion trigger, the enhancement engine 308a, 308b also deletes one or more enhancements from a live video stream. As mentioned above, in one or more embodiments, the enhancement engine 308a, 308b deletes an enhancement not only from a display associated with the broadcasting client device 102, but also from the live video stream such that one or more viewers of the live video stream no longer see the enhancement. In at least one embodiment, the enhancement engine 308a, 308b deletes an enhancement progressively. For example, if the enhancement type is a doodle wherein the broadcaster has drawn multiple points and/or lines segments, the enhancement engine 308a, 308b can delete the video enhancement display element such that the points or line segments drawn first are deleted before the points or lines drawn later. This gives the doodle a "fade-away" effect as the enhancement engine 308a, 308b may delete the beginning of the doodle while the broadcaster is still drawing.

More particularly, the enhancement engine 308a, 308b associates a time with each dot/point/pixel of an enhancement corresponding to when the dot/point/pixel was added to the live video. The enhancement engine 308a, 308b then deletes each dot/point/pixel when the pre-determined deletion trigger time has passed since the dot/point/pixel was added to the live video.

Alternatively, the enhancement engine 308a, 308b may delete an entire enhancement at the same time. For example, if the enhancement type is a stamp or mask, the enhancement engine 308a, 308b can delete the entire enhancement upon detecting the deletion trigger.

In one or more embodiments, the enhancement engine 308a, 308b bases the type of deletion technique (entire enhancement or dot by dot) based on one or more characteristics of the enhancement. For example, the enhancement engine 308a, 308b can determine that an enhancement is a word and then delete the entire word together at the same time. Alternatively, the enhancement engine 308a, 308b can determine that an enhancement is an artistic design and delete the enhancement dot by dot.

Additionally, the enhancement engine 308a, 308b can add animation and/or sound effects to the deletion of any enhancement. For example, the enhancement engine 308a, 308b can cause an enhancement to blow up by dividing the dots making up the enhancement and spreading them across the screen before removing them. Alternatively, the enhancement engine 308a, 308b can cause an enhancement to fade away by incrementally increasing the transparency of each dot of the enhancement until the enhancement is no longer visible.

While the features and functionalities of the enhancement manager 308a, 308b are described with reference to a live video stream, in at least one embodiment, the enhancement manager 308a, 308b can also embed one or more enhancements into a pre-recorded video. For example, in at least one embodiment, the broadcaster can select a pre-recorded video and select any of the settings described above. Further, the broadcaster can apply one or more enhancements to the pre-recorded video while the broadcasting the pre-recorded video to the communications system 110.

As shown in FIG. 3, and as mentioned above, the communications system application 106a, 106b also includes the data storage 310a, 310b. The data storage 310a, 310b includes video data 312a, 312b. In one or more embodiments, the video data 312a, 312b is representative of video information, such as described herein.

The broadcasting client device 102 and the viewer client device 104 also include camera and display features 314a, 314b. For example, in one or more embodiments the broadcasting client device 102 and the viewer client device 104 include at least one camera (e.g., a smart phone camera or tablet computer camera) and at least one display (e.g., a touch screen display). In one or more embodiments, the camera and display features 314a, 314b can be built-in, or peripheral. In additional embodiments, the broadcasting client device 102 and the viewer client device 104 can include multiple cameras and/or multiple displays.

Also as shown in FIG. 3, and as mentioned above, the server 108 hosts the communications system 110. The communications system 110 provides social networking system posts, electronic message, structured objects, and live video streams to one or more social networking system users (e.g., by way of a profile, a newsfeed, a communication thread, a timeline, a "wall," a live video stream display, or any other type of graphical user interface). For example, one or more embodiments provide a user with a social networking system newsfeed containing posts from one or more co-users associated with the user (e.g., the user's "friends").

In one or more embodiments, a user scrolls through his or her social networking system newsfeed in order to view recent posts submitted by the one or more co-users associated with the user via the communications system 110. In one embodiment, the communications system 110 organizes the posts chronologically in a user's social networking system newsfeed or wall. In alternative embodiments, the communications system 110 organizes the social networking system posts geographically, by interest groups, according to a relationship coefficient between the user and the co-user, etc. Additionally, in one or more embodiments, the user can download a copy of the social networking system newsfeed as a record of the social networking system posts displayed thereon.

The communications system 110 also enables the user to engage in all other types of social networking system activity. For example, the communications system 110 enables a social networking system user to scroll through newsfeeds, click on posts and hyperlinks, compose and submit electronic messages and posts, interact with structured object, watch live video streams, interact with multimedia, and so forth.

As mentioned above, and as shown in FIG. 3, the communications system 110 includes a video engine 316. In one or more embodiments, the video engine 316 handles activities associated with live video streams. For example, the video engine 316 detects the initiation of a live video stream from the broadcasting client device 102. Furthermore, the video engine 316 provides access to the live video stream to one or more viewers associated with the broadcaster via the communications system 110.

Furthermore, in at least one embodiment, the video engine 316 provides access to one or more viewers of a live video stream that enables the one or more viewers to add enhancements to the live video stream. For example, in most embodiments, only a broadcaster adds enhancements to a live video stream. In some embodiments, however, a broadcaster and one or more viewers can add enhancements to the live video stream. For instance, the broadcaster can set a preference that grants permission to one or more viewers to add enhancements to the broadcaster's live video stream. Accordingly, the video engine 316 grants access to the one or more viewers to add enhancements to the live video stream.

In another embodiment, the video engine 316 can automatically grant access to one or more viewers to add enhancement to the live video stream when each of the one or more viewers have a sufficient relationship coefficient with the broadcaster. For example, in one or more embodiments, the communications system 110 analyzes various types of interactions between social networking system users (e.g., clicks, likes, comments, shares, check-ins, profile information, etc.) and quantifies the relationship between two users as a relationship coefficient. For instance, the relationship coefficient between two co-workers is likely higher than the relationship coefficient between two adults who attended the same junior high 15 years ago. As such, in response to detecting the initiation of a live video stream from a broadcaster, the video engine 316 can analyze relationship coefficients between the broadcaster and the social networking system users with whom the broadcaster is friends. The video engine 316 can then automatically grant access to one or more of the social networking system users who are viewing the live video stream and who have a relationship coefficient with the broadcaster above a threshold amount. If the video engine 316 automatically grants enhancement access to a viewer (e.g., the user of the viewer client device 104), the enhancement engine 308b on the viewer client device 104 provides the same setting controls and enhancement features provided to the broadcaster, as described above.

In at least one embodiment, the video engine 316 allows the broadcaster to grant enhancement privilege to a sponsor. For example, if the broadcaster is an athlete who is sponsored by a sporting goods company, the video engine 316 can enable the broadcaster to grant the sponsor enhancement access to the broadcaster's live video stream, even if the broadcaster and the sponsor are not "friends" via the communications system 110. Additionally, in at least one embodiment, the video engine 316 can automatically suggest one or more sponsors to the broadcaster prior to the initiation of the live video stream. The video engine 316 can suggest one or more sponsors based on a variety of social networking system signals (e.g., the number of friends the broadcaster has, the broadcaster's likes, broadcaster's comments, the frequency with which the broadcaster initiates live video streams, etc.).

As shown in FIG. 3, and as mentioned above, the communications system 110 also includes the data storage 318. The data storage 318 includes video data 320. In one or more embodiments, the video data 320 is representative of video information, such as described herein.

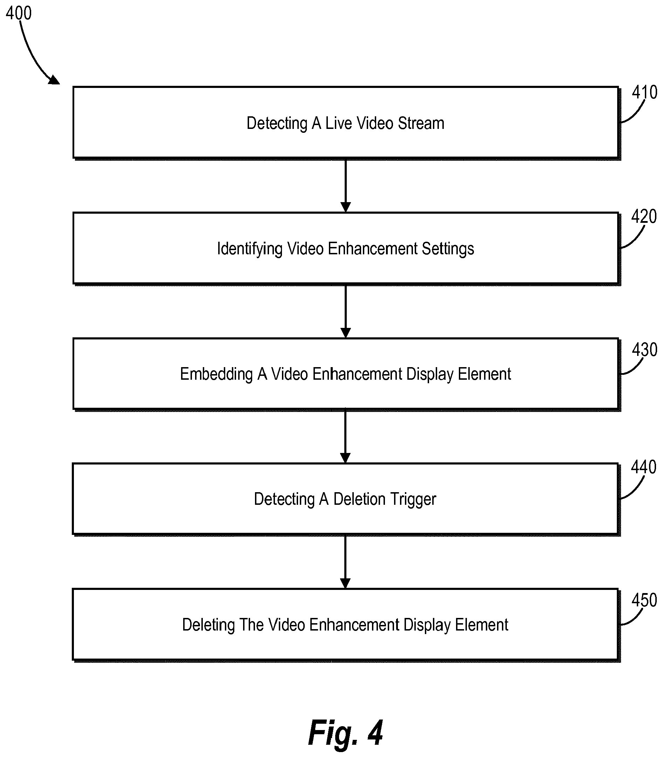

FIGS. 1-3, the corresponding text, and the examples, provide a number of different methods, systems, and devices for enhancing live video streams utilizing the video enhancement system 100. In addition to the foregoing, one or more embodiments can also be described in terms of flowcharts comprising acts in a method for accomplishing a particular result. For example, FIG. 4 may be performed with less or more acts or the acts may be performed in differing orders. Additionally, the acts described herein may be repeated or performed in parallel with one another or in parallel with different instances of the same or similar acts.

FIG. 4 illustrates a flowchart of one example method 400 of enhancing a live video stream. The method 400 includes an act 410 of detecting a live video stream. For example, in at least one embodiment, the act 410 involves detecting the initiation of a live video stream at a client-computing device.

Additionally, the method 400 includes an act 420 of identifying video enhancement settings. In particular, the act 420 involves identifying one or more video enhancement settings. For example, identifying one or more video enhancement settings can include one or more of identifying enhancement appearance settings and identifying enhancement deletion trigger settings. In one or more embodiments, identifying enhancement appearance settings includes one or more of identifying color settings, identifying style settings, identifying opacity settings, and identifying user interaction settings. Also in one or more embodiments, identifying enhancement deletion trigger settings includes one or more of identifying time expiration deletion trigger settings, identifying motion deletion trigger settings, and identifying tracking deletion trigger settings.

In at least one embodiment, the method 400 also includes an act of, in response to identifying tracking deletion trigger setting, analyzing the live video stream to identify an object displayed in the live video stream that is spatially associated with the video enhancement display element. Following this, the method 400 further includes acts of detecting movement associated with the identified object, and repositioning the video enhancement display element such that the spatially association between the video enhancement display element and the identified object is retained.

The method 400 also includes an act 430 of embedding a video enhancement display element. In particular, the act 430 involves embedding, in response to a detected user interaction in accordance with at least one of the one or more video enhancement settings, a video enhancement display element into the live video stream. For example, embedding a video enhancement display element can include embedding a doodle, a stamp, an animation, a sticker, a mask, or a sound effect into the live video stream.

Furthermore, the method 400 includes an act 440 of detecting a deletion trigger. In particular, the act 440 involves detecting one or more deletion triggers associated with the video enhancement display element. For example, detecting one or more deletion triggers associated with the video enhancement display element includes one or more of: detecting the expiration of a threshold amount of time from when the video enhancement display element was embedded into the live video stream, detecting more than a threshold amount of motion within the live video stream, and detecting the exit of a tracked object from the live video stream. In at least one embodiment, the method 400 includes, in response to detecting a re-appearance of a tracked object into the live video stream, re-embedding the video enhancement display element into the live video stream.

The method 400 also includes an act 450 of deleting the video enhancement display element. In particular, the act 450 involves deleting, based on the detected deletion trigger, the video enhancement display element from the live video stream. For example, deleting the video enhancement display element can include progressively deleting line segments associated with the video enhancement display element.

Embodiments of the present disclosure may comprise or utilize a special purpose or general-purpose computer including computer hardware, such as, for example, one or more processors and system memory, as discussed in greater detail below. Embodiments within the scope of the present disclosure also include physical and other computer-readable media for carrying or storing computer-executable instructions and/or data structures. In particular, one or more of the processes described herein may be implemented at least in part as instructions embodied in a non-transitory computer-readable medium and executable by one or more computing devices (e.g., any of the media content access devices described herein). In general, a processor (e.g., a microprocessor) receives instructions, from a non-transitory computer-readable medium, (e.g., a memory, etc.), and executes those instructions, thereby performing one or more processes, including one or more of the processes described herein.

Computer-readable media can be any available media that can be accessed by a general purpose or special purpose computer system. Computer-readable media that store computer-executable instructions are non-transitory computer-readable storage media (devices). Computer-readable media that carry computer-executable instructions are transmission media. Thus, by way of example, and not limitation, embodiments of the disclosure can comprise at least two distinctly different kinds of computer-readable media: non-transitory computer-readable storage media (devices) and transmission media.

Non-transitory computer-readable storage media (devices) includes RAM, ROM, EEPROM, CD-ROM, solid state drives ("SSDs") (e.g., based on RAM), Flash memory, phase-change memory ("PCM"), other types of memory, other optical disk storage, magnetic disk storage or other magnetic storage devices, or any other medium which can be used to store desired program code means in the form of computer-executable instructions or data structures and which can be accessed by a general purpose or special purpose computer.

A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer, the computer properly views the connection as a transmission medium. Transmissions media can include a network and/or data links which can be used to carry desired program code means in the form of computer-executable instructions or data structures and which can be accessed by a general purpose or special purpose computer. Combinations of the above should also be included within the scope of computer-readable media.

Further, upon reaching various computer system components, program code means in the form of computer-executable instructions or data structures can be transferred automatically from transmission media to non-transitory computer-readable storage media (devices) (or vice versa). For example, computer-executable instructions or data structures received over a network or data link can be buffered in RAM within a network interface module (e.g., a "NIC"), and then eventually transferred to computer system RAM and/or to less volatile computer storage media (devices) at a computer system. Thus, it should be understood that non-transitory computer-readable storage media (devices) can be included in computer system components that also (or even primarily) utilize transmission media.

Computer-executable instructions comprise, for example, instructions and data which, when executed at a processor, cause a general purpose computer, special purpose computer, or special purpose processing device to perform a certain function or group of functions. In some embodiments, computer-executable instructions are executed on a general-purpose computer to turn the general-purpose computer into a special purpose computer implementing elements of the disclosure. The computer executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the disclosure may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, and the like. The disclosure may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

Embodiments of the present disclosure can also be implemented in cloud computing environments. In this description, "cloud computing" is defined as a model for enabling on-demand network access to a shared pool of configurable computing resources. For example, cloud computing can be employed in the marketplace to offer ubiquitous and convenient on-demand access to the shared pool of configurable computing resources. The shared pool of configurable computing resources can be rapidly provisioned via virtualization and released with low management effort or service provider interaction, and then scaled accordingly.

A cloud-computing model can be composed of various characteristics such as, for example, on-demand self-service, broad network access, resource pooling, rapid elasticity, measured service, and so forth. A cloud-computing model can also expose various service models, such as, for example, Software as a Service ("SaaS"), Platform as a Service ("PaaS"), and Infrastructure as a Service ("IaaS"). A cloud-computing model can also be deployed using different deployment models such as private cloud, community cloud, public cloud, hybrid cloud, and so forth. In this description and in the claims, a "cloud-computing environment" is an environment in which cloud computing is employed.

FIG. 5 illustrates a block diagram of exemplary computing device 500 that may be configured to perform one or more of the processes described above. One will appreciate that one or more computing devices such as the computing device 500 may implement the video enhancement system 100. As shown by FIG. 5, the computing device 500 can comprise a processor 502, a memory 504, a storage device 506, an I/O interface 508, and a communication interface 510, which may be communicatively coupled by way of a communication infrastructure 512. While an exemplary computing device 500 is shown in FIG. 5, the components illustrated in FIG. 5 are not intended to be limiting. Additional or alternative components may be used in other embodiments. Furthermore, in certain embodiments, the computing device 500 can include fewer components than those shown in FIG. 5. Components of the computing device 500 shown in FIG. 5 will now be described in additional detail.

In one or more embodiments, the processor 502 includes hardware for executing instructions, such as those making up a computer program. As an example and not by way of limitation, to execute instructions, the processor 502 may retrieve (or fetch) the instructions from an internal register, an internal cache, the memory 504, or the storage device 506 and decode and execute them. In one or more embodiments, the processor 502 may include one or more internal caches for data, instructions, or addresses. As an example and not by way of limitation, the processor 502 may include one or more instruction caches, one or more data caches, and one or more translation lookaside buffers (TLBs). Instructions in the instruction caches may be copies of instructions in the memory 504 or the storage 506.

The memory 504 may be used for storing data, metadata, and programs for execution by the processor(s). The memory 504 may include one or more of volatile and non-volatile memories, such as Random Access Memory ("RAM"), Read Only Memory ("ROM"), a solid state disk ("SSD"), Flash, Phase Change Memory ("PCM"), or other types of data storage. The memory 504 may be internal or distributed memory.

The storage device 506 includes storage for storing data or instructions. As an example and not by way of limitation, storage device 506 can comprise a non-transitory storage medium described above. The storage device 506 may include a hard disk drive (HDD), a floppy disk drive, flash memory, an optical disc, a magneto-optical disc, magnetic tape, or a Universal Serial Bus (USB) drive or a combination of two or more of these. The storage device 506 may include removable or non-removable (or fixed) media, where appropriate. The storage device 506 may be internal or external to the computing device 500. In one or more embodiments, the storage device 506 is non-volatile, solid-state memory. In other embodiments, the storage device 506 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or flash memory or a combination of two or more of these.

The I/O interface 508 allows a user to provide input to, receive output from, and otherwise transfer data to and receive data from computing device 500. The I/O interface 508 may include a mouse, a keypad or a keyboard, a touch screen, a camera, an optical scanner, network interface, modem, other known I/O devices or a combination of such I/O interfaces. The I/O interface 508 may include one or more devices for presenting output to a user, including, but not limited to, a graphics engine, a display (e.g., a display screen), one or more output drivers (e.g., display drivers), one or more audio speakers, and one or more audio drivers. In certain embodiments, the I/O interface 508 is configured to provide graphical data to a display for presentation to a user. The graphical data may be representative of one or more graphical user interfaces and/or any other graphical content as may serve a particular implementation.

The communication interface 510 can include hardware, software, or both. In any event, the communication interface 510 can provide one or more interfaces for communication (such as, for example, packet-based communication) between the computing device 500 and one or more other computing devices or networks. As an example and not by way of limitation, the communication interface 510 may include a network interface controller (NIC) or network adapter for communicating with an Ethernet or other wire-based network or a wireless NIC (WNIC) or wireless adapter for communicating with a wireless network, such as a WI-FI.

Additionally, or alternatively, the communication interface 510 may facilitate communications with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, the communication interface 510 may facilitate communications with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination thereof.

Additionally, the communication interface 510 may facilitate communications various communication protocols. Examples of communication protocols that may be used include, but are not limited to, data transmission media, communications devices, Transmission Control Protocol ("TCP"), Internet Protocol ("IP"), File Transfer Protocol ("FTP"), Telnet, Hypertext Transfer Protocol ("HTTP"), Hypertext Transfer Protocol Secure ("HTTPS"), Session Initiation Protocol ("SIP"), Simple Object Access Protocol ("SOAP"), Extensible Mark-up Language ("XML") and variations thereof, Simple Mail Transfer Protocol ("SMTP"), Real-Time Transport Protocol ("RTP"), User Datagram Protocol ("UDP"), Global System for Mobile Communications ("GSM") technologies, Code Division Multiple Access ("CDMA") technologies, Time Division Multiple Access ("TDMA") technologies, Short Message Service ("SMS"), Multimedia Message Service ("MMS"), radio frequency ("RF") signaling technologies, Long Term Evolution ("LTE") technologies, wireless communication technologies, in-band and out-of-band signaling technologies, and other suitable communications networks and technologies.

The communication infrastructure 512 may include hardware, software, or both that couples components of the computing device 500 to each other. As an example and not by way of limitation, the communication infrastructure 512 may include an Accelerated Graphics Port (AGP) or other graphics bus, an Enhanced Industry Standard Architecture (EISA) bus, a frontside bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination thereof.

As mentioned above, the video enhancement system 100 can form part of a social networking system. A social networking system may enable its users (such as persons or organizations) to interact with the system and with each other. The social networking system may, with input from a user, create and store in the social networking system a user profile associated with the user. The user profile may include demographic information, communication-channel information, and information on personal interests of the user. The social networking system may also, with input from a user, create and store a record of relationships of the user with other users of the social networking system, as well as provide services (e.g., posts, photo-sharing, event organization, messaging, games, or advertisements) to facilitate social interaction between or among users.

The social networking system may store records of users and relationships between users in a social graph comprising a plurality of nodes and a plurality of edges connecting the nodes. The nodes may comprise a plurality of user nodes and a plurality of concept nodes. A user node of the social graph may correspond to a user of the social networking system. A user may be an individual (human user), an entity (e.g., an enterprise, business, or third party application), or a group (e.g., of individuals or entities). A user node corresponding to a user may comprise information provided by the user and information gathered by various systems, including the social networking system.

For example, the user may provide his or her name, profile picture, city of residence, contact information, birth date, gender, marital status, family status, employment, educational background, preferences, interests, and other demographic information to be included in the user node. Each user node of the social graph may have a corresponding web page (typically known as a profile page). In response to a request including a user name, the social networking system can access a user node corresponding to the user name, and construct a profile page including the name, a profile picture, and other information associated with the user. A profile page of a first user may display to a second user all or a portion of the first user's information based on one or more privacy settings by the first user and the relationship between the first user and the second user.

A concept node may correspond to a concept of the social networking system. For example, a concept can represent a real-world entity, such as a movie, a song, a sports team, a celebrity, a group, a restaurant, or a place or a location. An administrative user of a concept node corresponding to a concept may create or update the concept node by providing information of the concept (e.g., by filling out an online form), causing the social networking system to associate the information with the concept node. For example, and without limitation, information associated with a concept can include a name or a title, one or more images (e.g., an image of cover page of a book), a web site (e.g., an URL address) or contact information (e.g., a phone number, an email address). Each concept node of the social graph may correspond to a web page. For example, in response to a request including a name, the social networking system can access a concept node corresponding to the name, and construct a web page including the name and other information associated with the concept.

An edge between a pair of nodes may represent a relationship between the pair of nodes. For example, an edge between two user nodes can represent a friendship between two users. For another example, the social networking system may construct a web page (or a structured document) of a concept node (e.g., a restaurant, a celebrity), incorporating one or more selectable option or selectable elements (e.g., "like", "check in") in the web page. A user can access the page using a web browser hosted by the user's client device and select a selectable option or selectable element, causing the client device to transmit to the social networking system a request to create an edge between a user node of the user and a concept node of the concept, indicating a relationship between the user and the concept (e.g., the user checks in a restaurant, or the user "likes" a celebrity).

As an example, a user may provide (or change) his or her city of residence, causing the social networking system to create an edge between a user node corresponding to the user and a concept node corresponding to the city declared by the user as his or her city of residence. In addition, the degree of separation between any two nodes is defined as the minimum number of hops required to traverse the social graph from one node to the other. A degree of separation between two nodes can be considered a measure of relatedness between the users or the concepts represented by the two nodes in the social graph. For example, two users having user nodes that are directly connected by an edge (i.e., are first-degree nodes) may be described as "connected users" or "friends." Similarly, two users having user nodes that are connected only through another user node (i.e., are second-degree nodes) may be described as "friends of friends."

A social networking system may support a variety of applications, such as photo sharing, on-line calendars and events, gaming, instant messaging, and advertising. For example, the social networking system may also include media sharing capabilities. Also, the social networking system may allow users to post photographs and other multimedia content items to a user's profile page (typically known as "wall posts" or "timeline posts") or in a photo album, both of which may be accessible to other users of the social networking system depending upon the user's configured privacy settings. The social networking system may also allow users to configure events. For example, a first user may configure an event with attributes including time and date of the event, location of the event and other users invited to the event. The invited users may receive invitations to the event and respond (such as by accepting the invitation or declining it). Furthermore, the social networking system may allow users to maintain a personal calendar. Similar to events, the calendar entries may include times, dates, locations and identities of other users.

FIG. 6 illustrates an example network environment 600 of a social networking system. Network environment 600 includes a client device 606, a social networking system 602, and a third-party system 608 connected to each other by a network 604. Although FIG. 6 illustrates a particular arrangement of client device 606, social networking system 602, third-party system 608, and network 604, this disclosure contemplates any suitable arrangement of client device 606, social networking system 602, third-party system 608, and network 604. As an example and not by way of limitation, two or more of client device 606, social networking system 602, and third-party system 608 may be connected to each other directly, bypassing network 604. As another example, two or more of client device 606, social networking system 602, and third-party system 608 may be physically or logically co-located with each other in whole or in part. Moreover, although FIG. 6 illustrates a particular number of client devices 606, social networking systems 602, third-party systems 608, and networks 604, this disclosure contemplates any suitable number of client devices 606, social networking systems 602, third-party systems 608, and networks 604. As an example and not by way of limitation, network environment 600 may include multiple client device 606, social networking systems 602, third-party systems 608, and networks 604.

This disclosure contemplates any suitable network 604. As an example and not by way of limitation, one or more portions of network 604 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 604 may include one or more networks 604.

Links may connect client device 606, social networking system 602, and third-party system 608 to communication network 604 or to each other. This disclosure contemplates any suitable links. In particular embodiments, one or more links include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In particular embodiments, one or more links each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link, or a combination of two or more such links. Links need not necessarily be the same throughout network environment 600. One or more first links may differ in one or more respects from one or more second links.

In particular embodiments, client device 606 may be an electronic device including hardware, software, or embedded logic components or a combination of two or more such components and capable of carrying out the appropriate functionalities implemented or supported by client device 606. As an example and not by way of limitation, a client device 606 may include a computer system such as a desktop computer, notebook or laptop computer, netbook, a tablet computer, e-book reader, GPS device, camera, personal digital assistant (PDA), handheld electronic device, cellular telephone, smartphone, other suitable electronic device, or any suitable combination thereof. This disclosure contemplates any suitable client devices 606. A client device 606 may enable a network user at client device 606 to access network 604. A client device 606 may enable its user to communicate with other users at other client devices 606.

In particular embodiments, client device 606 may include a web browser, such as MICROSOFT INTERNET EXPLORER, GOOGLE CHROME or MOZILLA FIREFOX, and may have one or more add-ons, plug-ins, or other extensions, such as TOOLBAR or YAHOO TOOLBAR. A user at client device 606 may enter a Uniform Resource Locator (URL) or other address directing the web browser to a particular server (such as server, or a server associated with a third-party system 608), and the web browser may generate a Hyper Text Transfer Protocol (HTTP) request and communicate the HTTP request to server. The server may accept the HTTP request and communicate to client device 606 one or more Hyper Text Markup Language (HTML) files responsive to the HTTP request. Client device 606 may render a webpage based on the HTML files from the server for presentation to the user. This disclosure contemplates any suitable webpage files. As an example and not by way of limitation, webpages may render from HTML files, Extensible Hyper Text Markup Language (XHTML) files, or Extensible Markup Language (XML) files, according to particular needs. Such pages may also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a webpage encompasses one or more corresponding webpage files (which a browser may use to render the webpage) and vice versa, where appropriate.

In particular embodiments, social networking system 602 may be a network-addressable computing system that can host an online social network. Social networking system 602 may generate, store, receive, and send social-networking data, such as, for example, user-profile data, concept-profile data, social-graph information, or other suitable data related to the online social network. Social networking system 602 may be accessed by the other components of network environment 600 either directly or via network 604. In particular embodiments, social networking system 602 may include one or more servers. Each server may be a unitary server or a distributed server spanning multiple computers or multiple datacenters. Servers may be of various types, such as, for example and without limitation, web server, news server, mail server, message server, advertising server, file server, application server, exchange server, database server, proxy server, another server suitable for performing functions or processes described herein, or any combination thereof. In particular embodiments, each server may include hardware, software, or embedded logic components or a combination of two or more such components for carrying out the appropriate functionalities implemented or supported by server. In particular embodiments, social networking system 602 may include one or more data stores. Data stores may be used to store various types of information. In particular embodiments, the information stored in data stores may be organized according to specific data structures. In particular embodiments, each data store may be a relational, columnar, correlation, or other suitable database. Although this disclosure describes or illustrates particular types of databases, this disclosure contemplates any suitable types of databases. Particular embodiments may provide interfaces that enable a client device 606, a social networking system 602, or a third-party system 608 to manage, retrieve, modify, add, or delete, the information stored in data store.

In particular embodiments, social networking system 602 may store one or more social graphs in one or more data stores. In particular embodiments, a social graph may include multiple nodes-which may include multiple user nodes (each corresponding to a particular user) or multiple concept nodes (each corresponding to a particular concept)-and multiple edges connecting the nodes. Social networking system 602 may provide users of the online social network the ability to communicate and interact with other users. In particular embodiments, users may join the online social network via social networking system 602 and then add connections (e.g., relationships) to a number of other users of social networking system 602 whom they want to be connected to. Herein, the term "friend" may refer to any other user of social networking system 602 with whom a user has formed a connection, association, or relationship via social networking system 602.

In particular embodiments, social networking system 602 may provide users with the ability to take actions on various types of items or objects, supported by social networking system 602. As an example and not by way of limitation, the items and objects may include groups or social networks to which users of social networking system 602 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in social networking system 602 or by an external system of third-party system 608, which is separate from social networking system 602 and coupled to social networking system 602 via a network 604.

In particular embodiments, social networking system 602 may be capable of linking a variety of entities. As an example and not by way of limitation, social networking system 602 may enable users to interact with each other as well as receive content from third-party systems 608 or other entities, or to allow users to interact with these entities through an application programming interfaces (API) or other communication channels.

In particular embodiments, a third-party system 608 may include one or more types of servers, one or more data stores, one or more interfaces, including but not limited to APIs, one or more web services, one or more content sources, one or more networks, or any other suitable components, e.g., that servers may communicate with. A third-party system 608 may be operated by a different entity from an entity operating social networking system 602. In particular embodiments, however, social networking system 602 and third-party systems 608 may operate in conjunction with each other to provide social-networking services to users of social networking system 602 or third-party systems 608. In this sense, social networking system 602 may provide a platform, or backbone, which other systems, such as third-party systems 608, may use to provide social-networking services and functionality to users across the Internet.

In particular embodiments, a third-party system 608 may include a third-party content object provider. A third-party content object provider may include one or more sources of content objects, which may be communicated to a client device 606. As an example and not by way of limitation, content objects may include information regarding things or activities of interest to the user, such as, for example, movie show times, movie reviews, restaurant reviews, restaurant menus, product information and reviews, or other suitable information. As another example and not by way of limitation, content objects may include incentive content objects, such as coupons, discount tickets, gift certificates, or other suitable incentive objects.

In particular embodiments, social networking system 602 also includes user-generated content objects, which may enhance a user's interactions with social networking system 602. User-generated content may include anything a user can add, upload, send, or "post" to social networking system 602. As an example and not by way of limitation, a user communicates posts to social networking system 602 from a client device 606. Posts may include data such as status updates or other textual data, location information, photos, videos, links, music or other similar data or media. Content may also be added to social networking system 602 by a third-party through a "communication channel," such as a newsfeed or stream.

In particular embodiments, social networking system 602 may include a variety of servers, sub-systems, programs, modules, logs, and data stores. In particular embodiments, social networking system 602 may include one or more of the following: a web server, action logger, API-request server, relevance-and-ranking engine, content-object classifier, notification controller, action log, third-party-content-object-exposure log, inference module, authorization/privacy server, search module, advertisement-targeting module, user-interface module, user-profile store, connection store, third-party content store, or location store. Social networking system 602 may also include suitable components such as network interfaces, security mechanisms, load balancers, failover servers, management-and-network-operations consoles, other suitable components, or any suitable combination thereof. In particular embodiments, social networking system 602 may include one or more user-profile stores for storing user profiles. A user profile may include, for example, biographic information, demographic information, behavioral information, social information, or other types of descriptive information, such as work experience, educational history, hobbies or preferences, interests, affinities, or location. Interest information may include interests related to one or more categories. Categories may be general or specific. As an example and not by way of limitation, if a user "likes" an article about a brand of shoes the category may be the brand, or the general category of "shoes" or "clothing." A connection store may be used for storing connection information about users. The connection information may indicate users who have similar or common work experience, group memberships, hobbies, educational history, or are in any way related or share common attributes. The connection information may also include user-defined connections between different users and content (both internal and external). A web server may be used for linking social networking system 602 to one or more client devices 606 or one or more third-party system 608 via network 604. The web server may include a mail server or other messaging functionality for receiving and routing messages between social networking system 602 and one or more client devices 606. An API-request server may allow a third-party system 608 to access information from social networking system 602 by calling one or more APIs. An action logger may be used to receive communications from a web server about a user's actions on or off social networking system 602. In conjunction with the action log, a third-party-content-object log may be maintained of user exposures to third-party-content objects. A notification controller may provide information regarding content objects to a client device 606. Information may be pushed to a client device 606 as notifications, or information may be pulled from client device 606 responsive to a request received from client device 606. Authorization servers may be used to enforce one or more privacy settings of the users of social networking system 602. A privacy setting of a user determines how particular information associated with a user can be shared. The authorization server may allow users to opt in to or opt out of having their actions logged by social networking system 602 or shared with other systems (e.g., third-party system 608), such as, for example, by setting appropriate privacy settings. Third-party-content-object stores may be used to store content objects received from third parties, such as a third-party system 608. Location stores may be used for storing location information received from client devices 606 associated with users. Advertisement-pricing modules may combine social information, the current time, location information, or other suitable information to provide relevant advertisements, in the form of notifications, to a user.

FIG. 7 illustrates example social graph 700. In particular embodiments, social networking system 602 may store one or more social graphs 700 in one or more data stores. In particular embodiments, social graph 700 may include multiple nodes-which may include multiple user nodes 702 or multiple concept nodes 704-and multiple edges 706 connecting the nodes. Example social graph 700 illustrated in FIG. 7 is shown, for didactic purposes, in a two-dimensional visual map representation. In particular embodiments, a social networking system 602, client device 606, or third-party system 608 may access social graph 700 and related social-graph information for suitable applications. The nodes and edges of social graph 700 may be stored as data objects, for example, in a data store (such as a social-graph database). Such a data store may include one or more searchable or query able indexes of nodes or edges of social graph 700.

In particular embodiments, a user node 702 may correspond to a user of social networking system 602. As an example and not by way of limitation, a user may be an individual (human user), an entity (e.g., an enterprise, business, or third-party application), or a group (e.g., of individuals or entities) that interacts or communicates with or over social networking system 602. In particular embodiments, when a user registers for an account with social networking system 602, social networking system 602 may create a user node 702 corresponding to the user, and store the user node 702 in one or more data stores. Users and user nodes 702 described herein may, where appropriate, refer to registered users and user nodes 702 associated with registered users. In addition or as an alternative, users and user nodes 702 described herein may, where appropriate, refer to users that have not registered with social networking system 602. In particular embodiments, a user node 702 may be associated with information provided by a user or information gathered by various systems, including social networking system 602. As an example and not by way of limitation, a user may provide his or her name, profile picture, contact information, birth date, sex, marital status, family status, employment, education background, preferences, interests, or other demographic information. In particular embodiments, a user node 702 may be associated with one or more data objects corresponding to information associated with a user. In particular embodiments, a user node 702 may correspond to one or more webpages.

In particular embodiments, a concept node 704 may correspond to a concept. As an example and not by way of limitation, a concept may correspond to a place (such as, for example, a movie theater, restaurant, landmark, or city); a website (such as, for example, a website associated with social-network system 602 or a third-party website associated with a web-application server); an entity (such as, for example, a person, business, group, sports team, or celebrity); a resource (such as, for example, an audio file, video file, digital photo, text file, structured document, or application) which may be located within social networking system 602 or on an external server, such as a web-application server; real or intellectual property (such as, for example, a sculpture, painting, movie, game, song, idea, photograph, or written work); a game; an activity; an idea or theory; another suitable concept; or two or more such concepts. A concept node 704 may be associated with information of a concept provided by a user or information gathered by various systems, including social networking system 602. As an example and not by way of limitation, information of a concept may include a name or a title; one or more images (e.g., an image of the cover page of a book); a location (e.g., an address or a geographical location); a website (which may be associated with a URL); contact information (e.g., a phone number or an email address); other suitable concept information; or any suitable combination of such information. In particular embodiments, a concept node 704 may be associated with one or more data objects corresponding to information associated with concept node 704. In particular embodiments, a concept node 704 may correspond to one or more webpages.

In particular embodiments, a node in social graph 700 may represent or be represented by a webpage (which may be referred to as a "profile page"). Profile pages may be hosted by or accessible to social networking system 602. Profile pages may also be hosted on third-party web-sites associated with a third-party server 608. As an example and not by way of limitation, a profile page corresponding to a particular external webpage may be the particular external webpage and the profile page may correspond to a particular concept node 704. Profile pages may be viewable by all or a selected subset of other users. As an example and not by way of limitation, a user node 702 may have a corresponding user-profile page in which the corresponding user may add content, make declarations, or otherwise express himself or herself. As another example and not by way of limitation, a concept node 704 may have a corresponding concept-profile page in which one or more users may add content, make declarations, or express themselves, particularly in relation to the concept corresponding to concept node 704.

In particular embodiments, a concept node 704 may represent a third-party webpage or resource hosted by a third-party system 608. The third-party webpage or resource may include, among other elements, content, a selectable or other icon, or other inter-actable object (which may be implemented, for example, in JavaScript, AJAX, or PHP codes) representing an action or activity. As an example and not by way of limitation, a third-party webpage may include a selectable icon such as "like," "check in," "eat," "recommend," or another suitable action or activity. A user viewing the third-party webpage may perform an action by selecting one of the icons (e.g., "eat"), causing a client device 606 to send to social networking system 602 a message indicating the user's action. In response to the message, social networking system 602 may create an edge (e.g., an "eat" edge) between a user node 702 corresponding to the user and a concept node 704 corresponding to the third-party webpage or resource and store edge 706 in one or more data stores.

In particular embodiments, a pair of nodes in social graph 700 may be connected to each other by one or more edges 706. An edge 706 connecting a pair of nodes may represent a relationship between the pair of nodes. In particular embodiments, an edge 706 may include or represent one or more data objects or attributes corresponding to the relationship between a pair of nodes. As an example and not by way of limitation, a first user may indicate that a second user is a "friend" of the first user. In response to this indication, social networking system 602 may send a "friend request" to the second user. If the second user confirms the "friend request," social networking system 602 may create an edge 706 connecting the first user's user node 702 to the second user's user node 702 in social graph 700 and store edge 706 as social-graph information in one or more of data stores. In the example of FIG. 7, social graph 700 includes an edge 706 indicating a friend relation between user nodes 702 of user "A" and user "B" and an edge indicating a friend relation between user nodes 702 of user "C" and user "B." Although this disclosure describes or illustrates particular edges 706 with particular attributes connecting particular user nodes 702, this disclosure contemplates any suitable edges 706 with any suitable attributes connecting user nodes 702. As an example and not by way of limitation, an edge 706 may represent a friendship, family relationship, business or employment relationship, fan relationship, follower relationship, visitor relationship, subscriber relationship, superior/subordinate relationship, reciprocal relationship, non-reciprocal relationship, another suitable type of relationship, or two or more such relationships. Moreover, although this disclosure generally describes nodes as being connected, this disclosure also describes users or concepts as being connected. Herein, references to users or concepts being connected may, where appropriate, refer to the nodes corresponding to those users or concepts being connected in social graph 700 by one or more edges 706.

In particular embodiments, an edge 706 between a user node 702 and a concept node 704 may represent a particular action or activity performed by a user associated with user node 702 toward a concept associated with a concept node 704. As an example and not by way of limitation, as illustrated in FIG. 7, a user may "like," "attended," "played," "listened," "cooked," "worked at," or "watched" a concept, each of which may correspond to an edge type or subtype. A concept-profile page corresponding to a concept node 704 may include, for example, a selectable "check in" icon (such as, for example, a clickable "check in" icon) or a selectable "add to favorites" icon. Similarly, after a user clicks these icons, social networking system 602 may create a "favorite" edge or a "check in" edge in response to a user's action corresponding to a respective action. As another example and not by way of limitation, a user (user "C") may listen to a particular song ("Ramble On") using a particular application (SPOTIFY, which is an online music application). In this case, social networking system 602 may create a "listened" edge 706 and a "used" edge (as illustrated in FIG. 7) between user nodes 702 corresponding to the user and concept nodes 704 corresponding to the song and application to indicate that the user listened to the song and used the application. Moreover, social networking system 602 may create a "played" edge 706 (as illustrated in FIG. 7) between concept nodes 704 corresponding to the song and the application to indicate that the particular song was played by the particular application. In this case, "played" edge 706 corresponds to an action performed by an external application (SPOTIFY) on an external audio file (the song "Imagine"). Although this disclosure describes particular edges 706 with particular attributes connecting user nodes 702 and concept nodes 704, this disclosure contemplates any suitable edges 706 with any suitable attributes connecting user nodes 702 and concept nodes 704. Moreover, although this disclosure describes edges between a user node 702 and a concept node 704 representing a single relationship, this disclosure contemplates edges between a user node 702 and a concept node 704 representing one or more relationships. As an example and not by way of limitation, an edge 706 may represent both that a user likes and has used at a particular concept. Alternatively, another edge 706 may represent each type of relationship (or multiples of a single relationship) between a user node 702 and a concept node 704 (as illustrated in FIG. 7 between user node 702 for user "E" and concept node 704 for "SPOTIFY").

In particular embodiments, social networking system 602 may create an edge 706 between a user node 702 and a concept node 704 in social graph 700. As an example and not by way of limitation, a user viewing a concept-profile page (such as, for example, by using a web browser or a special-purpose application hosted by the user's client device 606) may indicate that he or she likes the concept represented by the concept node 704 by clicking or selecting a "Like" icon, which may cause the user's client device 606 to send to social networking system 602 a message indicating the user's liking of the concept associated with the concept-profile page. In response to the message, social networking system 602 may create an edge 706 between user node 702 associated with the user and concept node 704, as illustrated by "like" edge 706 between the user and concept node 704. In particular embodiments, social networking system 602 may store an edge 706 in one or more data stores. In particular embodiments, an edge 706 may be automatically formed by social networking system 602 in response to a particular user action. As an example and not by way of limitation, if a first user uploads a picture, watches a movie, or listens to a song, an edge 706 may be formed between user node 702 corresponding to the first user and concept nodes 704 corresponding to those concepts. Although this disclosure describes forming particular edges 706 in particular manners, this disclosure contemplates forming any suitable edges 706 in any suitable manner.

In particular embodiments, an advertisement may be text (which may be HTML-linked), one or more images (which may be HTML-linked), one or more videos, audio, one or more ADOBE FLASH files, a suitable combination of these, or any other suitable advertisement in any suitable digital format presented on one or more webpages, in one or more e-mails, or in connection with search results requested by a user. In addition or as an alternative, an advertisement may be one or more sponsored stories (e.g., a news-feed or ticker item on social networking system 602). A sponsored story may be a social action by a user (such as "liking" a page, "liking" or commenting on a post on a page, RSVPing to an event associated with a page, voting on a question posted on a page, checking in to a place, using an application or playing a game, or "liking" or sharing a website) that an advertiser promotes, for example, by having the social action presented within a pre-determined area of a profile page of a user or other page, presented with additional information associated with the advertiser, bumped up or otherwise highlighted within news feeds or tickers of other users, or otherwise promoted. The advertiser may pay to have the social action promoted. As an example and not by way of limitation, advertisements may be included among the search results of a search-results page, where sponsored content is promoted over non-sponsored content.

In particular embodiments, an advertisement may be requested for display within social-networking-system webpages, third-party webpages, or other pages. An advertisement may be displayed in a dedicated portion of a page, such as in a banner area at the top of the page, in a column at the side of the page, in a GUI of the page, in a pop-up window, in a drop-down menu, in an input field of the page, over the top of content of the page, or elsewhere with respect to the page. In addition or as an alternative, an advertisement may be displayed within an application. An advertisement may be displayed within dedicated pages, requiring the user to interact with or watch the advertisement before the user may access a page or utilize an application. The user may, for example view the advertisement through a web browser.

A user may interact with an advertisement in any suitable manner. The user may click or otherwise select the advertisement. By selecting the advertisement, the user may be directed to (or a browser or other application being used by the user) a page associated with the advertisement. At the page associated with the advertisement, the user may take additional actions, such as purchasing a product or service associated with the advertisement, receiving information associated with the advertisement, or subscribing to a newsletter associated with the advertisement. An advertisement with audio or video may be played by selecting a component of the advertisement (like a "play button"). Alternatively, by selecting the advertisement, social networking system 602 may execute or modify a particular action of the user.

An advertisement may also include social-networking-system functionality that a user may interact with. As an example and not by way of limitation, an advertisement may enable a user to "like" or otherwise endorse the advertisement by selecting an icon or link associated with endorsement. As another example and not by way of limitation, an advertisement may enable a user to search (e.g., by executing a query) for content related to the advertiser. Similarly, a user may share the advertisement with another user (e.g., through social networking system 602) or RSVP (e.g., through social networking system 602) to an event associated with the advertisement. In addition or as an alternative, an advertisement may include social-networking-system context directed to the user. As an example and not by way of limitation, an advertisement may display information about a friend of the user within social networking system 602 who has taken an action associated with the subject matter of the advertisement.

In particular embodiments, social networking system 602 may determine the social-graph affinity (which may be referred to herein as "affinity") of various social-graph entities for each other. Affinity may represent the strength of a relationship or level of interest between particular objects associated with the online social network, such as users, concepts, content, actions, advertisements, other objects associated with the online social network, or any suitable combination thereof. Affinity may also be determined with respect to objects associated with third-party systems 608 or other suitable systems. An overall affinity for a social-graph entity for each user, subject matter, or type of content may be established. The overall affinity may change based on continued monitoring of the actions or relationships associated with the social-graph entity. Although this disclosure describes determining particular affinities in a particular manner, this disclosure contemplates determining any suitable affinities in any suitable manner.

In particular embodiments, social networking system 602 may measure or quantify social-graph affinity using an affinity coefficient (which may be referred to herein as "coefficient"). The coefficient may represent or quantify the strength of a relationship between particular objects associated with the online social network. The coefficient may also represent a probability or function that measures a predicted probability that a user will perform a particular action based on the user's interest in the action. In this way, a user's future actions may be predicted based on the user's prior actions, where the coefficient may be calculated at least in part on the history of the user's actions. Coefficients may be used to predict any number of actions, which may be within or outside of the online social network. As an example and not by way of limitation, these actions may include various types of communications, such as sending messages, posting content, or commenting on content; various types of observation actions, such as accessing or viewing profile pages, media, or other suitable content; various types of coincidence information about two or more social-graph entities, such as being in the same group, tagged in the same photograph, checked-in at the same location, or attending the same event; or other suitable actions. Although this disclosure describes measuring affinity in a particular manner, this disclosure contemplates measuring affinity in any suitable manner.

In particular embodiments, social networking system 602 may use a variety of factors to calculate a coefficient. These factors may include, for example, user actions, types of relationships between objects, location information, other suitable factors, or any combination thereof. In particular embodiments, different factors may be weighted differently when calculating the coefficient. The weights for each factor may be static or the weights may change according to, for example, the user, the type of relationship, the type of action, the user's location, and so forth. Ratings for the factors may be combined according to their weights to determine an overall coefficient for the user. As an example and not by way of limitation, particular user actions may be assigned both a rating and a weight while a relationship associated with the particular user action is assigned a rating and a correlating weight (e.g., so the weights total 100%). To calculate the coefficient of a user towards a particular object, the rating assigned to the user's actions may comprise, for example, 60% of the overall coefficient, while the relationship between the user and the object may comprise 40% of the overall coefficient. In particular embodiments, the social networking system 602 may consider a variety of variables when determining weights for various factors used to calculate a coefficient, such as, for example, the time since information was accessed, decay factors, frequency of access, relationship to information or relationship to the object about which information was accessed, relationship to social-graph entities connected to the object, short- or long-term averages of user actions, user feedback, other suitable variables, or any combination thereof. As an example and not by way of limitation, a coefficient may include a decay factor that causes the strength of the signal provided by particular actions to decay with time, such that more recent actions are more relevant when calculating the coefficient. The ratings and weights may be continuously updated based on continued tracking of the actions upon which the coefficient is based. Any type of process or algorithm may be employed for assigning, combining, averaging, and so forth the ratings for each factor and the weights assigned to the factors. In particular embodiments, social networking system 602 may determine coefficients using machine-learning algorithms trained on historical actions and past user responses, or data farmed from users by exposing them to various options and measuring responses. Although this disclosure describes calculating coefficients in a particular manner, this disclosure contemplates calculating coefficients in any suitable manner.

In particular embodiments, social networking system 602 may calculate a coefficient based on a user's actions. Social networking system 602 may monitor such actions on the online social network, on a third-party system 608, on other suitable systems, or any combination thereof. Any suitable type of user actions may be tracked or monitored. Typical user actions include viewing profile pages, creating or posting content, interacting with content, joining groups, list-ing and confirming attendance at events, checking-in at locations, liking particular pages, creating pages, and performing other tasks that facilitate social action. In particular embodiments, social networking system 602 may calculate a coefficient based on the user's actions with particular types of content. The content may be associated with the online social network, a third-party system 608, or another suitable system. The content may include users, profile pages, posts, news stories, headlines, instant messages, chat room conversations, emails, advertisements, pictures, video, music, other suitable objects, or any combination thereof. Social networking system 602 may analyze a user's actions to determine whether one or more of the actions indicate an affinity for subject matter, content, other users, and so forth. As an example and not by way of limitation, if a user may make frequently posts content related to "coffee" or variants thereof, social networking system 602 may determine the user has a high coefficient with respect to the concept "coffee". Particular actions or types of actions may be assigned a higher weight and/or rating than other actions, which may affect the overall calculated coefficient. As an example and not by way of limitation, if a first user emails a second user, the weight or the rating for the action may be higher than if the first user simply views the user-profile page for the second user.

In particular embodiments, social networking system 602 may calculate a coefficient based on the type of relationship between particular objects. Referencing the social graph 700, social networking system 602 may analyze the number and/or type of edges 706 connecting particular user nodes 702 and concept nodes 704 when calculating a coefficient. As an example and not by way of limitation, user nodes 702 that are connected by a spouse-type edge (representing that the two users are married) may be assigned a higher coefficient than a user node 702 that are connected by a friend-type edge. In other words, depending upon the weights assigned to the actions and relationships for the particular user, the overall affinity may be determined to be higher for content about the user's spouse than for content about the user's friend. In particular embodiments, the relationships a user has with another object may affect the weights and/or the ratings of the user's actions with respect to calculating the coefficient for that object. As an example and not by way of limitation, if a user is tagged in first photo, but merely likes a second photo, social networking system 602 may determine that the user has a higher coefficient with respect to the first photo than the second photo because having a tagged-in-type relationship with content may be assigned a higher weight and/or rating than having a like-type relationship with content. In particular embodiments, social networking system 602 may calculate a coefficient for a first user based on the relationship one or more second users have with a particular object. In other words, the connections and coefficients other users have with an object may affect the first user's coefficient for the object. As an example and not by way of limitation, if a first user is connected to or has a high coefficient for one or more second users, and those second users are connected to or have a high coefficient for a particular object, social networking system 602 may determine that the first user should also have a relatively high coefficient for the particular object. In particular embodiments, the coefficient may be based on the degree of separation between particular objects. The lower coefficient may represent the decreasing likelihood that the first user will share an interest in content objects of the user that is indirectly connected to the first user in the social graph 700. As an example and not by way of limitation, social-graph entities that are closer in the social graph 700 (i.e., fewer degrees of separation) may have a higher coefficient than entities that are further apart in the social graph 700.

In particular embodiments, social networking system 602 may calculate a coefficient based on location information. Objects that are geographically closer to each other may be considered to be more related, or of more interest, to each other than more distant objects. In particular embodiments, the coefficient of a user towards a particular object may be based on the proximity of the object's location to a current location associated with the user (or the location of a client device 606 of the user). A first user may be more interested in other users or concepts that are closer to the first user. As an example and not by way of limitation, if a user is one mile from an airport and two miles from a gas station, social networking system 602 may determine that the user has a higher coefficient for the airport than the gas station based on the proximity of the airport to the user.

In particular embodiments, social networking system 602 may perform particular actions with respect to a user based on coefficient information. Coefficients may be used to predict whether a user will perform a particular action based on the user's interest in the action. A coefficient may be used when generating or presenting any type of objects to a user, such as advertisements, search results, news stories, media, messages, notifications, or other suitable objects. The coefficient may also be utilized to rank and order such objects, as appropriate. In this way, social networking system 602 may provide information that is relevant to user's interests and current circumstances, increasing the likelihood that they will find such information of interest. In particular embodiments, social networking system 602 may generate content based on coefficient information. Content objects may be provided or selected based on coefficients specific to a user. As an example and not by way of limitation, the coefficient may be used to generate media for the user, where the user may be presented with media for which the user has a high overall coefficient with respect to the media object. As another example and not by way of limitation, the coefficient may be used to generate advertisements for the user, where the user may be presented with advertisements for which the user has a high overall coefficient with respect to the advertised object. In particular embodiments, social networking system 602 may generate search results based on coefficient information. Search results for a particular user may be scored or ranked based on the coefficient associated with the search results with respect to the querying user. As an example and not by way of limitation, search results corresponding to objects with higher coefficients may be ranked higher on a search-results page than results corresponding to objects having lower coefficients.

In particular embodiments, social networking system 602 may calculate a coefficient in response to a request for a coefficient from a particular system or process. To predict the likely actions a user may take (or may be the subject of) in a given situation, any process may request a calculated coefficient for a user. The request may also include a set of weights to use for various factors used to calculate the coefficient. This request may come from a process running on the online social network, from a third-party system 608 (e.g., via an API or other communication channel), or from another suitable system. In response to the request, social networking system 602 may calculate the coefficient (or access the coefficient information if it has previously been calculated and stored). In particular embodiments, social networking system 602 may measure an affinity with respect to a particular process. Different processes (both internal and external to the online social network) may request a coefficient for a particular object or set of objects. Social networking system 602 may provide a measure of affinity that is relevant to the particular process that requested the measure of affinity. In this way, each process receives a measure of affinity that is tailored for the different context in which the process will use the measure of affinity.

In connection with social-graph affinity and affinity coefficients, particular embodiments may utilize one or more systems, components, elements, functions, methods, operations, or steps disclosed in U.S. Patent Application No. 11/503093, filed 11 August 2006, U.S. Patent Application No. 12/977027, filed 22 December 2010, U.S. Patent Application No. 12/978265, filed 23 December 2010, and U.S. Patent Application No. 13/632869, field 01 October 2012, each of which is incorporated by reference.

In particular embodiments, one or more of the content objects of the online social network may be associated with a privacy setting. The privacy settings (or "access settings") for an object may be stored in any suitable manner, such as, for example, in association with the object, in an index on an authorization server, in another suitable manner, or any combination thereof. A privacy setting of an object may specify how the object (or particular information associated with an object) can be accessed (e.g., viewed or shared) using the online social network. Where the privacy settings for an object allow a particular user to access that object, the object may be described as being "visible" with respect to that user. As an example and not by way of limitation, a user of the online social network may specify privacy settings for a user-profile page identify a set of users that may access the work experience information on the user-profile page, thus excluding other users from accessing the information. In particular embodiments, the privacy settings may specify a "blocked list" of users that should not be allowed to access certain information associated with the object. In other words, the blocked list may specify one or more users or entities for which an object is not visible. As an example and not by way of limitation, a user may specify a set of users that may not access photos albums associated with the user, thus excluding those users from accessing the photo albums (while also possibly allowing certain users not within the set of users to access the photo albums). In particular embodiments, privacy settings may be associated with particular social-graph elements. Privacy settings of a social-graph element, such as a node or an edge, may specify how the social-graph element, information associated with the social-graph element, or content objects associated with the social-graph element can be accessed using the online social network. As an example and not by way of limitation, a particular concept node 704 corresponding to a particular photo may have a privacy setting specifying that the photo may only be accessed by users tagged in the photo and their friends. In particular embodiments, privacy settings may allow users to opt in or opt out of having their actions logged by social networking system 602 or shared with other systems (e.g., third-party system 608). In particular embodiments, the privacy settings associated with an object may specify any suitable granularity of permitted access or denial of access. As an example and not by way of limitation, access or denial of access may be specified for particular users (e.g., only me, my roommates, and my boss), users within a particular degrees-of-separation (e.g., friends, or friends-of-friends), user groups (e.g., the gaming club, my family), user networks (e.g., employees of particular employers, students or alumni of particular university), all users ("public"), no users ("private"), users of third-party systems 608, particular applications (e.g., third-party applications, external websites), other suitable users or entities, or any combination thereof. Although this disclosure describes using particular privacy settings in a particular manner, this disclosure contemplates using any suitable privacy settings in any suitable manner.

In particular embodiments, one or more servers may be authorization/privacy servers for enforcing privacy settings. In response to a request from a user (or other entity) for a particular object stored in a data store, social networking system 602 may send a request to the data store for the object. The request may identify the user associated with the request and may only be sent to the user (or a client device 606 of the user) if the authorization server determines that the user is authorized to access the object based on the privacy settings associated with the object. If the requesting user is not authorized to access the object, the authorization server may prevent the requested object from being retrieved from the data store, or may prevent the requested object from be sent to the user. In the search query context, an object may only be generated as a search result if the querying user is authorized to access the object. In other words, the object must have a visibility that is visible to the querying user. If the object has a visibility that is not visible to the user, the object may be excluded from the search results. Although this disclosure describes enforcing privacy settings in a particular manner, this disclosure contemplates enforcing privacy settings in any suitable manner.

The foregoing specification is described with reference to specific exemplary embodiments thereof. Various embodiments and aspects of the disclosure are described with reference to details discussed herein, and the accompanying drawings illustrate the various embodiments. The description above and drawings are illustrative and are not to be construed as limiting. Numerous specific details are described to provide a thorough understanding of various embodiments.

The additional or alternative embodiments may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A computer-implemented method comprising:
detecting, by a video enhancement system of a communication system, a live video stream from a broadcasting client device;
identifying one or more video enhancement settings, in particular from the broadcasting client device;
embedding, on a server or client device of the video enhancement system, in response to a detected user interaction, in particular on the broadcasting client device, in accordance with at least one of the one or more video enhancement settings, a video enhancement display element into the live video stream;
detecting one or more deletion triggers associated with the video enhancement display element; and
deleting, based on the detected deletion trigger, the video enhancement display element from the live video stream.

2. The method as recited in claim 1, wherein identifying one or more video enhancement settings comprises one or more of identifying enhancement appearance settings and identifying enhancement deletion trigger settings.

3. The method as recited in claim 2, wherein identifying enhancement appearance settings comprises one or more of identifying color settings, identifying shape settings, identifying opacity settings, and identifying user interaction settings.

4. The method as recited in claim 2, wherein identifying enhancement deletion trigger settings comprises one or more of identifying time expiration deletion trigger settings, identifying motion deletion trigger settings, and identifying tracking deletion trigger settings.

5. The method as recited in claim 4, further comprising, in response to identifying tracking deletion trigger settings:
analyzing the live video stream to identify an object displayed in the live video stream that has a spatial association with the video enhancement display element;
detecting movement associated with the identified object; and
repositioning the video enhancement display element such that the spatial association between the video enhancement display element and the identified object is retained.

6. The method as recited in any of claims 1 to 5, wherein detecting one or more deletion triggers associated with the video enhancement display element comprises one or more of:
detecting the expiration of a threshold amount of time from when the video enhancement display element was embedded into the live video stream;
detecting more than a threshold amount of motion within the live video stream; or
detecting the exit of a tracked object from the live video stream.

7. The method as recited in claim 6, further comprising, in response to detecting a reappearance of a tracked object into the live video stream, re-embedding the video enhancement display element into the live video stream.

8. The method as recited in any of claims 1 to 7, wherein deleting the video enhancement display element comprises progressively deleting line segments associated with the video enhancement display element.

9. A system comprising:
at least one processor; and
at least one non-transitory computer-readable storage medium storing instructions thereon that, when executed by the at least one processor, cause the system to perform a method according to any of claims 1 to 8.

10. A non-transitory computer-readable medium storing instructions thereon that, when executed by at least one processor, cause a computer system to perform a method according to any of claims 1 to 8.
